# EUROPEAN PATENT SPECIFICATION

(11) **EP 2 324 993 B1**
(45) Date of publication and mention of the grant of the patent: **25.06.2014**
(21) Application number: 10191583.3
(22) Date of filing: 17.11.2010
(51) Int. Cl.: B29C 65/52, A41H 43/04, D06H 5/00, B05C 11/10, A41D 27/24

(54) **Cloth bonding apparatus**
Vorrichtung zum Verbinden vom Stoff
Appareil de liaison de tissus

(30) Priority: 19.11.2009 JP 2009263458
(43) Date of publication of application: 25.05.2011
(73) Proprietor: Brother Kogyo Kabushiki Kaisha, Nagoya-shi, Aichi 467-8561 (JP)
(72) Inventor: Yamaura, Hiroki, Nagoya-shi Aichi 467-8562 (JP); Nishimura, Kazuto, Nagoya-shi Aichi 467-8562 (JP); Nemoto, Yoshimitsu, Nagoya-shi Aichi 467-8562 (JP); Minagawa, Yuichiro, Nagoya-shi Aichi 467-8562 (JP); Enya, Tetsuji, Nagoya-shi Aichi 467-8562 (JP); Umeda, Kazutoshi, Nagoya-shi Aichi 467-8562 (JP); Gamano, Jun, Nagoya-shi Aichi 467-8562 (JP)
(74) Representative: Prüfer & Partner GbR European Patent Attorneys

(56) References cited:
- EP-A1- 2 216 164
- US-A- 2 664 938
- US-A1- 2003 010 439

## Description

### BACKGROUND

The present invention relates to a cloth bonding apparatus, and particularly to a cloth bonding apparatus that bonds cloths.

A cloth bonding apparatus is directed for bonding cloths with an adhesive instead of sewing the cloths with a needle and a thread. The cloth surfaces sewn by the thread have unevenness thereon due to the thread appearing on the cloth surfaces. By bonding the cloths with the adhesive, the bonding apparatus can eliminate the unevenness. The cloth surfaces processed by the bonding apparatus are smooth. Thus, the cloth bonding apparatus is capable of manufacturing clothes and the like which are free from discomfort when touched with the skin.

The cloth bonding apparatus discharges a liquid adhesive from a nozzle and applies it onto a cloth. A worker lays another cloth on top of the cloth on which the adhesive has been applied. The bonding apparatus presses the cloths together to thereby bond the cloths to each other.

The cloth bonding apparatus needs to discharge the adhesive accurately on a desired position of the cloth. With an apparatus described in Japanese Patent Application Laid-Open Publication No. 2008-62301, a worker inputs the size of a circuit board in the apparatus. The apparatus drives a conveyer having the circuit board fixed thereon based on the size of the circuit board, and discharges a material for better soldering on the circuit board. Thus, the apparatus can discharge the material on the circuit board.

US 2,664,938 A discloses a generic cloth bonding apparatus according to the preamble of claim 1. Another cloth bonding apparatus in the shape of a seam sealing apparatus is known from US 2003/010439 A1.

### SUMMARY

The timing for starting discharge of the material and the timing for stopping discharge of the material depend on characteristics (such as viscosity) of the material. In a case where another material having different characteristics is used, the apparatus cannot discharge the other material at a desired timing since the discharge timings are different from each other. Therefore, it is difficult for the apparatus to discharge the other material accurately onto a desired position.

It is an object of the present invention to provide a cloth bonding apparatus capable of accurately discharging an adhesive onto a desired position on a cloth even when an adhesive having different material characteristics is used.

A cloth bonding apparatus according to the present invention includes a nozzle through which an adhesive is dischargeable onto a cloth, a feed portion that is adapted to feed the cloth, a channel through which the adhesive can flow toward the nozzle, an opening/closing portion that opens and closes the channel, a supplying portion that is adapted to supply the channel with the adhesive, a first input portion through which an instruction to start or end a bonding work of bonding the cloth can be input, a first measurement portion that measures a first elapsed time since the instruction to start the bonding work was input through the first input portion, a start control portion that controls the feeding portion to start feeding the cloth in a case where the first elapsed time is a first time or longer, controls the supplying portion to start supplying the adhesive in a case where the first elapsed time is a second time or longer, and controls the opening/closing portion to open the channel in a case where the first elapsed time is the third time or longer, a second measurement portion that measures a second elapsed time since a predetermined point of time, after the start control portion has controlled the feeding portions, the opening/closing portion and the supplying portion, and an end control portion that controls the feeding portion to end feeding the cloth in a case where the second elapsed time is the fourth time or longer, controls the supplying portion to stop supplying the adhesive in a case where the second elapsed time is the fifth time or longer, and controls the opening/closing portion to close the channel in a case where the second elapsed time is the sixth time or longer.

In the cloth bonding apparatus, operation timings for feeding the cloths, opening/closing the channel, and supplying the adhesive can be set individually. The timing for discharging the adhesive varies depending on material characteristics of the adhesive. The cloth bonding apparatus can individually control the feed portion, the opening/closing portion and the supplying portion at timings that suit the material characteristics of the adhesive. Thus, the cloth bonding apparatus can discharge the adhesive accurately on a desired position at a desired timing.

In the cloth bonding apparatus, the predetermined point of time may be when the instruction to end the bonding work is input through the first input portion. In this case, the cloth bonding apparatus determines the timings for stopping the cloth feeding, closing the channel, and ending supply of the adhesive with reference to the point of time when the worker inputs an instruction to end the work. Thus, the cloth bonding apparatus can stop discharging the adhesive onto a desired position based on the worker's instruction to end the work.

The cloth bonding apparatus may include a detection portion that is adapted to detect whether or not the cloth is present at a predetermined position on an upstream side of the nozzle in a cloth feeding direction, and the predetermined point of time may be when the detection portion detects that the cloth is not present at the predetermined position. In this case the cloth bonding apparatus can detect an end of the cloth on the upstream side in the cloth feeding direction. The cloth bonding apparatus does not discharge the adhesive from the nozzle in a case where no cloth is present under the nozzle. Therefore, the cloth bonding apparatus can prevent the adhesive from adhering to a bed portion.

The cloth bonding apparatus may include a detection portion that is adapted to detect whether or not the cloth is present at a predetermined position on an upstream side of the nozzle in a cloth feeding direction, a first storage portion that stores therein a feeding distance by which the feed portion is to feed the cloth, and a determination portion that determines whether or not the feeding portion has fed the cloth by the feeding distance since the point of time when the detection portion detected that the cloth is not present at the predetermined position any more, and the predetermined point of time may be when the determination portion determines that the feeding portion has fed the cloth by the feeding distance. In this case, after detecting the end of the cloth, the cloth bonding apparatus can feed the cloth by the feeding distance and discharge the adhesive. The cloth bonding apparatus can discharge the adhesive up to the end of the cloth even in this case where the position where the detection portion detects the cloth and the position of the nozzle are away from each other.

The cloth bonding apparatus may include a second storage portion that stores therein combinations of the first time, the second time, the third time, the fourth time, the fifth time and the sixth time and a type of the adhesive in an associated manner, and a second input portion through which the type of the adhesive can be input, and the start control portion may read from the second storage portion the first time, the second time, and the third time corresponding to the type of the adhesive input through the second input portion and compares each of the first time, the second time, and the third time with the first elapsed time, and the end control portion may read from the second storage portion the fourth time, the fifth time and the sixth time corresponding to the type of the adhesive input through the second input portion and compares each of the fourth time, fifth time, and the sixth time with the second elapsed time. In this case, even if a different adhesive is used, the cloth bonding apparatus can start and stop discharging the adhesive at an appropriate timing.

The cloth bonding apparatus may include a detection portion that is adapted to detect whether or not the cloth is present at a predetermined position on an upstream side of the nozzle in a cloth feeding direction, a first storage portion that stores therein a feeding distance by which the feeding portion is to feed the cloth, a calculation portion that calculates a reference time period by dividing the feeding distance stored in the first storage portion by a feed speed of the cloth to be fed by the feeding portion, a third storage portion that stores therein a seventh time for specifying a control timing of the feeding portion, an eighth time for specifying a control timing of the supplying portion and a ninth time for specifying a control timing of the opening/closing portion, the seventh time, the eighth time, and the ninth time being defined with reference to a reference point of time when the reference time period calculated by the calculation portion elapses since the detection portion detects that the cloth is not present at the predetermined position, and a specification portion that specifies the fourth time based on the reference point of time and the seventh time, specifies the fifth time based on the reference point of time and the eighth time, and specifies the sixth time based on the reference point of time and the ninth time, and the end control portion may control the feeding portion, the opening/closing portion and the supplying portion based on the forth time, the fifth time and the sixth time specified by the specification portion. In this case, the cloth bonding apparatus can set a point of time when the end of the cloth passes under the nozzle as the reference point of time. The cloth bonding apparatus can reliably stop feeding the cloth and discharging the adhesive when the cloth is under the nozzle. The cloth bonding apparatus does not discharge the adhesive when no cloth is present under the nozzle. Therefore, the cloth bonding apparatus can prevent the adhesive from adhering to the bed portion. The cloth bonding apparatus can feed the cloth and discharge the adhesive even after the detection portion detects the end of the cloth. The cloth bonding apparatus can discharge the adhesive up to the end of the cloth even if the position where the detection portion detects the cloth and the position of the nozzle are away from each other.

### BRIEF DESCRIPTION OF THE DRAWINGS

FIG. 1 is a perspective view of an entire cloth bonding apparatus 1 viewed diagonally from above and front.
FIG. 2 is a perspective view of a bonding machine 2 viewed diagonally from above and front.
FIG. 3 is a front view of the bonding machine 2.
FIG. 4 is a left side view of the bonding machine 2.
FIG. 5 is a perspective view of the internal configuration of the bonding machine 2 viewed diagonally from above and front.
FIG. 6 is a sectional view of a storage chamber 26, a pump casing 31 and a support portion 40 in the bonding machine 2 viewed from its left side.
FIG. 7 is a block diagram showing an electric configuration of the cloth bonding apparatus 1.
FIG. 8 is a perspective view of the vicinity of a nozzle 45 during a bonding work.
FIG. 9 is a schematic diagram showing a time table 991 according to a first embodiment.
FIG. 10 is a timing chart showing operation timings according to the first embodiment.
FIG. 11 is a flowchart of an operation monitor processing according to the first embodiment.
FIG. 12 is a flowchart of a main control processing according to the first embodiment.
FIG. 13 is a flowchart of a work start processing according to the first embodiment.
FIG. 14 is a flowchart of a work end processing according to the first embodiment.
FIG. 15 is a flowchart of a feed processing according to the first embodiment.
FIG. 16 is a perspective view of the bonding machine 2 according to a second embodiment viewed diagonally from above and front.
FIG. 17 is a left side view of the bonding machine 2 according to the second embodiment.
FIG. 18 is a diagram showing operation timings according to the second embodiment.
FIG. 19 is a flowchart of a cloth monitor processing according to the second embodiment.
FIG. 20 is a flowchart of a main control processing according to the second embodiment.
FIG. 21 is a flowchart of a work end processing according to the second embodiment.
FIG. 22 is a diagram showing a time table 992 according to a third embodiment.
FIG. 23 is a diagram showing operation timings according to the third embodiment.
FIG. 24 is a flowchart of a work end processing according to the third embodiment.
FIG. 25 is a flowchart of the work end processing according to the third embodiment.

### DETAILED DESCRIPTION OF THE INVENTION

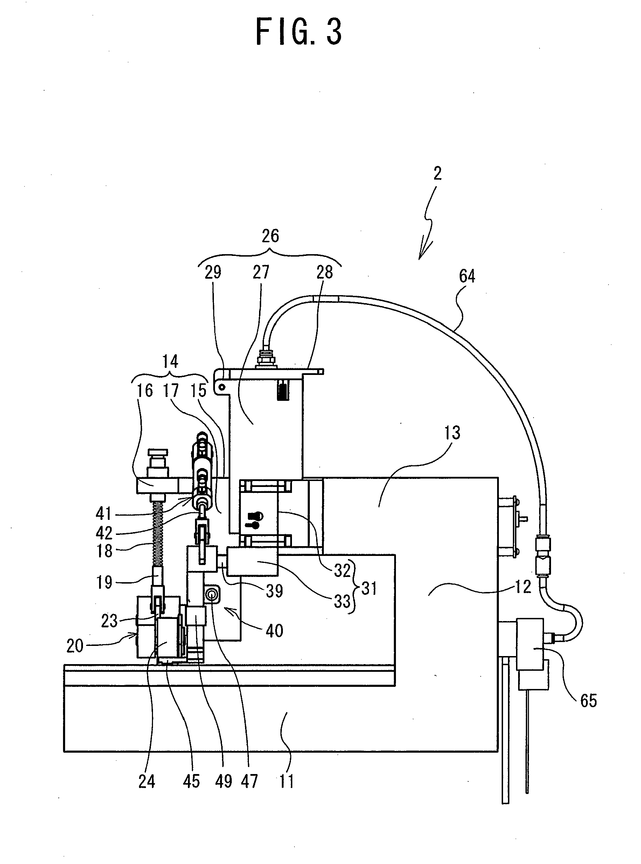

A cloth bonding apparatus 1 according to the present invention will be described below with reference to the drawings. In the following description, it is defined that the upper side, the lower side, the right side, the left side, the front face side, and the back face side of a bonding machine 2 shown in Fig. 3 are the upper side, the lower side, the right side, the left side, the front side, and the back side of the bonding machine 2, respectively.

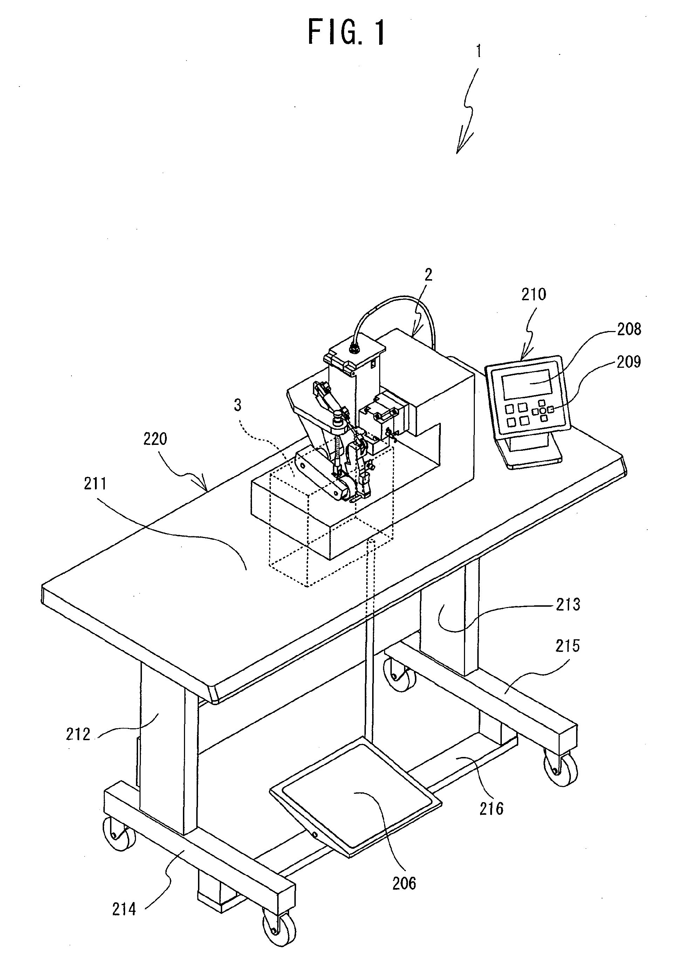

A configuration of the cloth bonding apparatus 1 will be described with reference to Fig. 1. The cloth bonding apparatus 1 includes the bonding machine 2 and a table 220. The bonding machine 2 is fixed on the table 220. The bonding machine 2 applies an adhesive between two layers of cloths arranged oppositely, and presses and feeds the cloths. The two layers of cloths are bonded together through the above operation of the bonding machine 2. A configuration of the bonding machine 2 will be described later in detail.

The table 220 has an operation panel 210 on the right side of a position where the bonding machine 2 is fixed. The operation panel 210 includes a liquid crystal display (LCD) portion 208 and a plurality of keys 209. The LCD portion 208 displays various items of information thereon. The keys 209 are directed for inputting various items of information. A worker may set various operations of the cloth bonding apparatus 1 by operating the keys 209 while looking at the LCD portion 208. The table 220 rotatably supports a pedal 206 at the lower end. The pedal 206 is used to adjust a cloth feed speed.

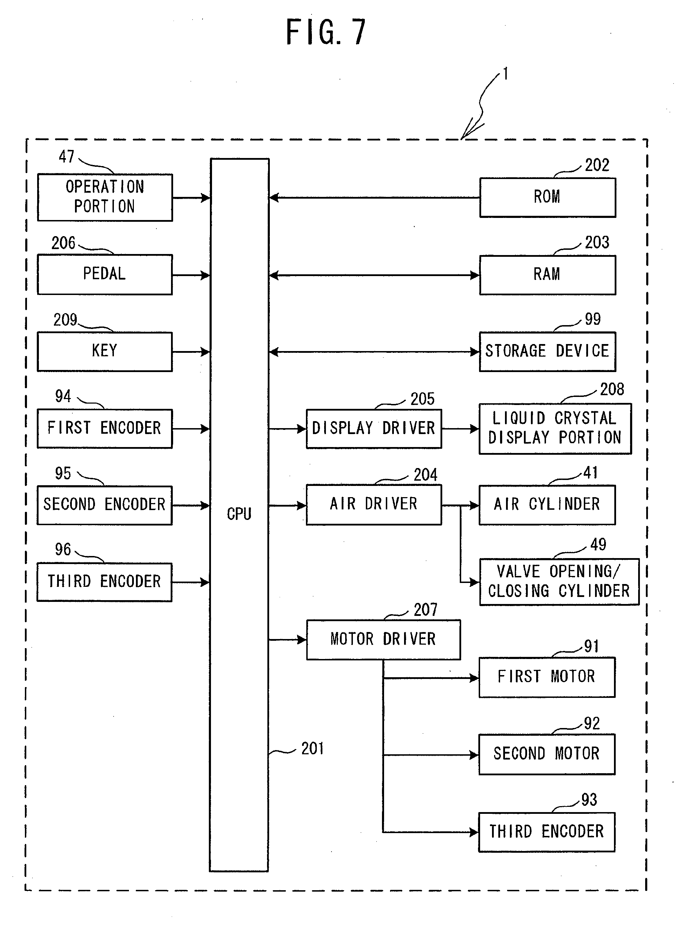

The table 220 includes a control box 3 at a position opposite to the bonding machine 2. The control box 3 stores a control board having a CPU 201 (see Fig. 7) and the like mounted thereon. The control box 3 is electrically connected to the bonding machine 2, the operation panel 210, and the pedal 206.

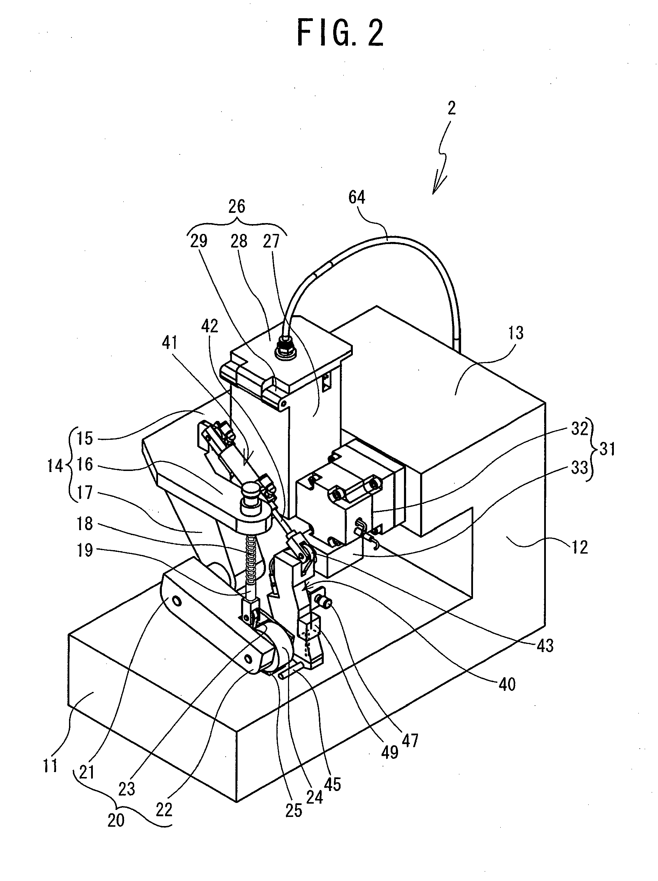

The configuration of the bonding machine 2 will be described with reference to Figs. 2 to 4. As shown in Figs. 2 and 3, the bonding machine 2 includes a bed portion 11, a pillar portion 12, and an arm portion 13. The bed portion 11 has a substantially rectangular parallelepiped shape with the right-and-left direction as the longitudinal direction. The pillar portion 12 extends vertically upwards from the right end of the bed portion 11. The arm portion 13 is connected to the upper end of the pillar portion 12 and extends leftward from the left side of the pillar portion 12.

The bed portion 11 functions as a base that supports the pillar portion 12. The pillar portion 12 supports the arm portion 13. As shown in Fig. 2, the left end of the arm portion 13 supports a pump casing 31, a storage chamber 26, and a beam portion 14, from front to back in this order.

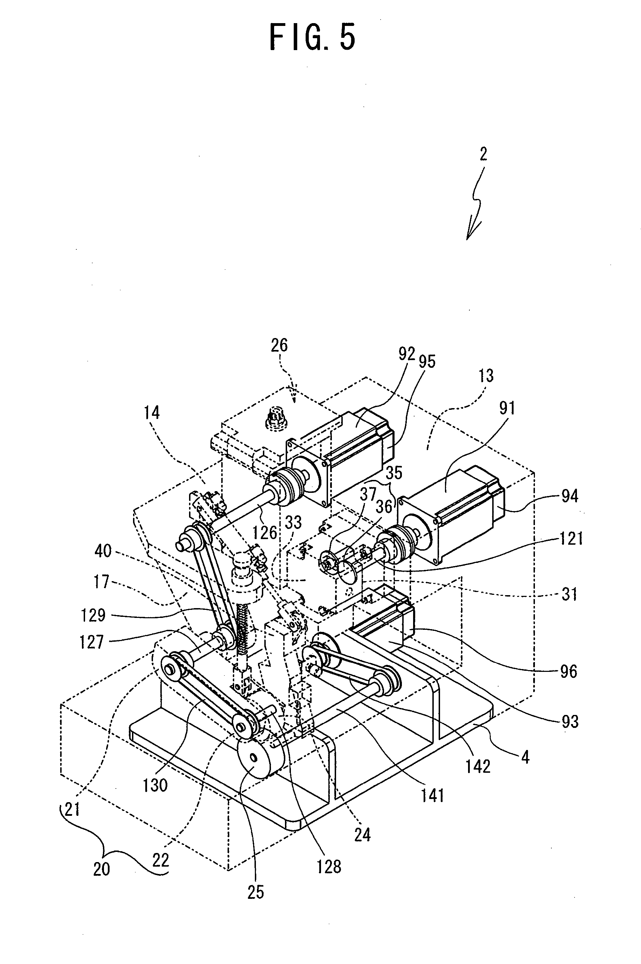

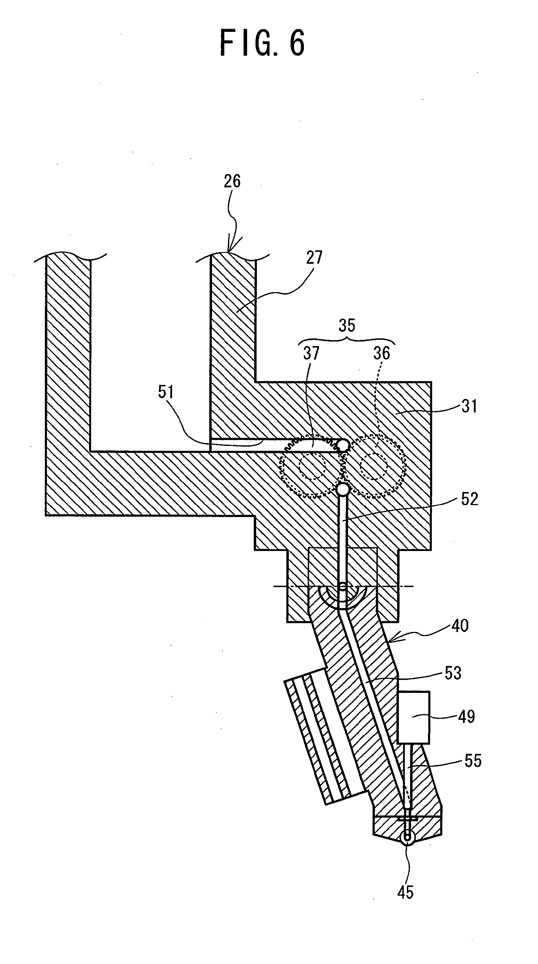

The pump casing 14 will be described. As shown in Figs. 2 and 3, the pump casing 31 includes a first pump casing 32 and a second pump casing 33. The first pump casing 32 is a substantially cubic member. The first pump casing 32 is fixed on the left side face of the arm portion 13. The first pump casing 32 includes therein a gear pump 35 (refer to Figs. 5 and 6). The gear pump 35 supplies an appropriate amount of the adhesive to a nozzle 45 with high accuracy. The second pump casing 33 is a substantially rectangular parallelepiped member. The second pump casing 33 extends downward from the left end portion of the lower face of the first pump casing 32.

The second pump casing 33 includes a shaft portion 39 (refer to Fig. 3) on its left side. The shaft portion 39 is connected to the right side of an upper end portion of a support portion 40 and swingably supports the support portion 40. The pump casing 31 includes a first channel 51 and a second channel 52 (refer to Fig. 6), which will be described later. The first channel 51 leads the adhesive from the storage chamber 26 to the gear pump 35. The second channel 52 leads the adhesive from the gear pump 35 to the support portion 40.

As shown in Figs. 2 and 3, the support portion 40 has a substantially rectangular parallelepiped shape with the vertical direction as the longitudinal direction. A small gap is present between the lower end of the support portion 40 and the bed portion 11. The support portion 40 includes the nozzle 45 at its lower end portion. The nozzle 45 extends leftward from the support portion 40. The support portion 40 includes a drive transmitting portion 43 at its upper end portion. The drive transmitting portion 43 supports the end portion of a movable portion 42 of an air cylinder 41. The support portion 40 swings back and forth (in a direction of an arrow A in Fig. 6) about the shaft portion 39 along with the back-and-forth movement of the movable portion 42 of the air cylinder 41. The nozzle 45 moves along with the swing of the support portion 40 to a position where a bonding work is performed and to a position where maintenance is performed.

As shown in Fig. 2, the nozzle 45 has a cylindrical shape. The nozzle 45 has a discharge port from which the adhesive is discharged. In a case where the worker performs the bonding work, the discharge port opposes the bed portion 11. In a case where the worker performs the bonding work, the worker inserts the nozzle 45 between the two layers of oppositely arranged cloths. The gear pump 35 supplies the adhesive to the nozzle 45 through a third channel 53 (see Fig. 6) provided inside the support portion 40. The nozzle 45 discharges the adhesive from the discharge port onto the cloth. The adhesive may be applied on the surface of the lower cloth positioned below the nozzle 45.

The support portion 40 includes an operation portion 47 substantially at the center in the vertical direction. The operation portion 47 is a button switch. The operation portion 47 is electrically connected to the control box 3. The support portion 40 is provides with a valve opening/closing cylinder 49 on its front side. The valve opening/closing cylinder 49 operates a valve 55 (see FIG. 6) for shutting off the third channel 53 (see FIG. 6). The valve 55 will be described later in detail.

As shown in Figs. 2 and 3, the storage chamber 26 has a substantially rectangular parallelepiped shape with the vertical direction as the longitudinal direction. The storage chamber 26 extends upward from the left side of the arm portion 13 and from the back of the pump casing 31. The storage chamber 26 includes a body portion 27, a cover portion 28, and a shaft portion 29. The body portion 27 has a bottomed tube shape having an opening at the top. The cover portion 28 covers the opening at the top of the body portion 27. The body portion 27 has the shaft portion 29 at its upper end. The shaft portion 29 supports the cover portion 28 in an openable/closable manner. The storage chamber 26 stores the adhesive in the body portion 27. The storage chamber 26 supplies the stored adhesive to the nozzle 45 if necessary.

The cover portion 28 of the storage chamber 26 is connected to one end of a hose 64. The other end of the hose 64 is connected to an air supplying portion 65 provided on the right side of the pillar portion 12 as shown in FIG. 3. A compressor (not shown) supplies the air supplying portion 65 with air. The air flows into the body portion 27 via the hose 64 to apply pressure to the adhesive within the body portion 27. The pressure pushes out the adhesive from the body portion 27 to the first channel 51 (see FIG. 6) and feeds the adhesive to the gear pump 35 (see FIGS. 5 and 6).

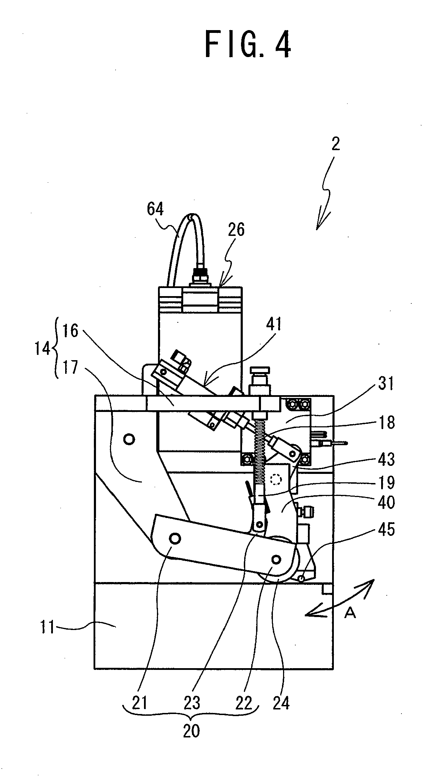

As shown in Fig. 2, the beam portion 14 includes a body portion 15, a spring support portion 16, and a column portion 17. The body portion 15 is a member extending horizontally leftward from the rear left end of the arm portion 13. The spring support portion 16 has a plate shape and extends horizontally forward from the left end portion of the body portion 15. As shown in Figs. 2 and 4, the column portion 17 extends obliquely downward from the body portion 15 at about 45 degrees relative to the horizontal plane. There is a gap between the lower end of the column portion 17 and the bed portion 11.

As shown in Fig. 2, the spring support portion 16 has a hole at the front end portion. The spring support portion 16 supports a shaft portion 19 in a vertically movable manner. The upper end portion of the shaft portion 19 is inserted through the hole of the spring support portion 16.

The column portion 17 has a shaft portion extending horizontally leftward from the lower end part thereof. The shaft portion supports a rear end portion 21 of a roller holding portion 20. The roller holding portion 20 may swing a front end portion 22 in the vertical direction with the shaft portion as the center of swing. The body portion 15 is provided with the air cylinder 41 at the right side of the spring support portion 16.The air cylinder 41 is directed for switching the position of the support portion 40.

The front end portion 22 of the roller holding portion 20 rotatably supports an upper feed roller 24 having a cylindrical shape. The upper feed roller 24 is positioned in the vicinity of the back of the nozzle 45. The roller holding portion 20 includes a shaft support portion 23 on the upper face of the front portion. The shaft support portion 23 supports the shaft portion 19. A spring 18 is interposed between the spring support portion 16 and the lower end of the shaft portion 19. The spring 18 urges the shaft portion 19 downwards, thereby urging the roller holding portion 20 connected to the shaft portion 19 downwards.

The inner configuration of the bonding machine 2 will be described below with reference to Fig. 5. The bonding machine 2 includes therein a first motor 91, a second motor 92, a third motor 93, and the like.

The first motor 91 transmits a rotation drive force to the gear pump 35 via a rotary shaft 121 thereby driving the gear pump 35. The gear pump 35 includes a drive gear 36 and a driven gear 37. The drive gear 36 is fixed at the left end of the rotary shaft 121. The drive gear 36 rotates along with the rotary shaft 121. The driven gear 37 meshes with the drive gear 36. The first motor 91 is positioned inside the arm portion 13 and to the right side of the portion where the pump casing 31 is connected to the arm portion 13. The rotary shaft 121 extends inside the pump casing 31 leftward from the rotary shaft of the first motor 91. The drive gear 36 and the driven gear 37 supply an appropriate amount of the adhesive to the nozzle 45.

The second motor 92 transmits a rotation drive force to the upper feed roller 24 via rotary shafts 126, 127, 128 and belts 129, 130 thereby driving the upper feed roller 24. The second motor 92 is positioned inside the arm portion 13 and to the right side of the portion where the beam portion 14 is connected with the arm portion 13. The rotary shaft 126 extends leftward from the rotary shaft of the second motor 92 and extends through the body portion 15. The left end of the rotary shaft 126 is positioned inside the column portion 17. The left end of the rotary shaft 126 supports a pulley. The right end of the rotary shaft 127 is positioned inside the lower end of the column portion 17 and the left end of the rotary shaft 127 is positioned inside the rear end portion 21 of the roller holding portion 20. The right end and left end of the rotary shaft 127 each support a pulley.

The rotary shaft 128 is a rotary shaft of the upper feed roller 24. The left end of the rotary shaft 128 is positioned inside the front end portion 22 of the roller holding portion 20 and supports a pulley. The right end of the rotary shaft 128 projects from the front end portion 22 of the roller holding portion 20 and supports the upper feed roller 24. The belt 129 is crossed between the pulley at the left end of the rotary shaft 126 and the pulley at the right end of the rotary shaft 127 inside the column portion 17. The belt 130 is crossed between the pulley at the left end of the rotary shaft 127 and the pulley at the left end of the rotary shaft 128 inside the roller holding portion 20. The upper feed roller 24 rotates along with the rotation of the second motor 92.

The third motor 93 transmits a rotation drive force to a lower feed roller 25 via a rotary shaft 141 and a belt 142 thereby driving the lower feed roller 25. The lower feed roller 25 is cylindrical and is fixed to the rotary shaft 141. The lower feed roller 25 is positioned below the upper feed roller 24 and inside the bed portion 11. The bed portion 11 has a support portion 4 therein. The support portion 4 rotatably supports the rotary shaft 141. The belt 142 is crossed between a pulley of a rotary shaft of the third motor 93 and a pulley at the right end of the rotary shaft 141 inside the bed portion 11. The lower feed roller 25 rotates along with the rotation of the third motor 93.

A first encoder 94 is connected to the right end of the first motor 91. The first encoder 94 detects a rotation amount of the first motor 91. A second encoder 95 is connected to the right end of the second motor 92. The second encoder 95 detects a rotation amount of the second motor 92. A third encoder 96 is connected to the right end of the third motor 93. The third encoder 96 detects a rotation amount of the third motor 93.

The channels of the adhesive and the valve 55 for shutting off the third channel 53 will be described with reference to Fig. 6. The body portion 27 of the storage channel 26 includes a bottom wall and a peripheral wall. The first channel 51 is a through hole that extends toward the pump casing 31 in the bottom wall of the storage chamber 26. The first channel 51 is a passage that leads the adhesive stored in the body portion 27 to the gear pump 35.

The first channel 51 leads from the storage chamber 26 to the center of the inside of the first pump casing 32 of the pump casing 31. The first channel 51 bends to the right at a right angle at the center of the first pump casing 32 and leads to the upper end of a portion where the drive gear 36 and the driven gear 37 are meshed with each other.

The second channel 52 is a passage that leads the adhesive that has passed through the gear pump 35 to the third channel 53 of the support portion 40. The second channel 52 extends leftward from the lower end of the portion where the drive gear 36 and the driven gear 37 are meshed with each other. The second channel 52 extending leftward bends downward, bends to the left at its lower end, and then leads to an inside of the upper end of the support portion 40.

The third channel 53 is a passage that leads the adhesive that has flowed through the second channel 52 to the nozzle 45. The third channel 53 extends from the upper end to the lower end inside the support portion 40 and leads to the nozzle 45. The valve 55 is provided at the lower end of the third channel 53. The valve opening/closing cylinder 49 opens and closes the third channel 53 thereby opening and closing the valve 55.

An electrical configuration of the cloth bonding apparatus 1 will be described with reference to Fig. 7. The cloth bonding apparatus 1 includes a CPU 201, a ROM 202, a RAM 203, and a storage device 99. The CPU 201 performs reception processing and control processing. The reception processing is a processing for receiving input information from the keys 209, the pedal 206, and the like. The control processing is a processing for controlling the motors and the like. The ROM 202 stores programs to be executed by the CPU 201 and various default parameters and the like. The RAM 203 temporarily stores timers, counters, flags, and the like. The storage device 99 stores a time table stored therein operating timings of the motor 91, 92, 93 and the valve opening/closing cylinder 49. The CPU 201 is electrically connected to the ROM 202, the RAM 203, and the storage device 99, respectively.

The operation portion 47 is electrically connected to the CPU 201. To disable discharge of the adhesive from the nozzle 45, the worker presses the operation portion 47. The CPU 201 recognizes a signal from the operation portion 47 that indicates whether or not the adhesive should be discharged. The CPU 201 determines whether or not the adhesive should be supplied to the nozzle 45 based on the recognized signal.

The pedal 206 is electrically connected with the CPU 201. The worker may use the pedal 206 to adjust a feed speed of the cloths. The CPU 201 recognizes an amount by which the pedal 206 is pressed down. The CPU 201 determines a rotation speed of the upper feed roller 24 and the lower feed roller 25 on the basis of the recognized adjustment amount of the pedal 206.

The keys 209 are electrically connected to the CPU 201. The worker may use the keys 209 to input the type of the adhesive or to set various operation settings. The CPU 201 recognizes the pressing status of the keys 209 operated by the worker. The CPU 201 stores information on various operation settings in the storage device 99 based on the recognized pressing status of the keys 209.

The encoders 94 to 96 are electrically connected to the CPU 201. The CPU 201 recognizes information on the rotation amounts detected by the encoders 94 to 96. The CPU 201 recognizes the actual rotation speeds of the motors 91 to 93 based on the information on the rotation amounts detected by the encoders 94 to 96.

A display driver 205 is electrically connected with the CPU 201. The LCD portion 208 is electrically connected with the display driver 205. The CPU 201 displays desired information on the LCD portion 208 via the display driver 205.

An air driver 204 is electrically connected to the CPU 201. The air cylinder 41 and the valve opening/closing cylinder 49 are electrically connected to the air driver 204. The CPU 201 controls the pressure of the air to be fed into the air cylinder 41 and the valve opening/closing cylinder 49 via the air driver 204.

A motor driver 207 is electrically connected with the CPU 201. The motors 91 to 93 each are electrically connected with the motor driver 207. The CPU 201 controls the motors 91 to 93 via the motor driver 207.

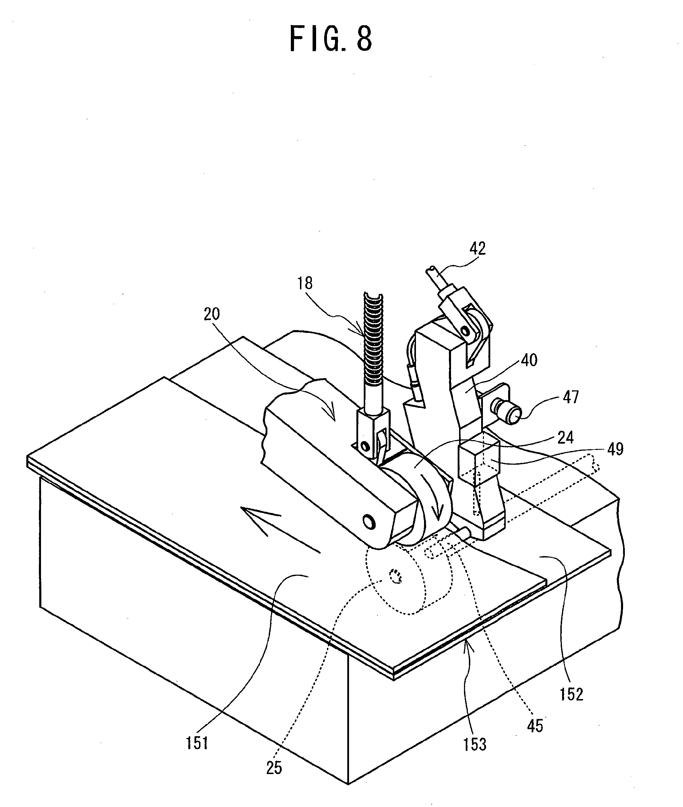

There will be described how the bonding machine 2 operates during a bonding operation of bonding an upper cloth 151 and a lower cloth 152 with reference to Fig. 8. In a case where the bonding operation is performed, the bonding machine 2 moves the movable portion 42 of the air cylinder 41 ahead and moves the support portion 40 to a use position. The worker stops the passing of the operation portion 47, and switches a state in which discharging the adhesive is enabled. The worker places the upper cloth 151 on the lower cloth 152. The worker places the nozzle 45 at a portion where the cloths are to be bonded. The upper feed roller 24 and the lower feed roller 25 sandwich the upper cloth 151 and the lower cloth 152 behind the nozzle 45.

In a case where the worker steps on and presses down the pedal 206, the adhesive flows through the channels 51, 52, and 53, and the adhesive is discharged from the discharge port of the nozzle 45. The adhesive adheres to the lower cloth 152. The upper feed roller 24 and the lower feed roller 25 rotate in a direction in which the upper cloth 151 and the lower cloth 152 are fed from front to back. Thus, the upper feed roller 24 and the lower feed roller 25 press and bond the upper cloth 151 and the lower cloth 152 together.

As the bonding work advances and ends 153 on the upstream side of the feeding direction of the upper cloth 151 and the lower cloth 152 (hereinafter simply referred to as "cloth ends") approach the nozzle 45, the worker stops pressing the stepping on the pedal 206. Since the pressing on the pedal 206 is stopped, the discharging of the adhesive and the feeding of the upper cloth 151 and the lower cloth 152 stop. Thereafter, the worker presses the operation portion 47. The cloth bonding apparatus 1 enters a state in which discharging the adhesive is disabled. The worker steps on and presses down the pedal 206 again. The upper feed roller 24 and the lower feed roller 25 rotate in a direction in which the upper cloth 151 and the lower cloth 152 are fed from front to back. The cloth bonding apparatus 1 presses and bonds the upper cloth 151 and the lower cloth 152 up to the cloth ends 153. Since discharging of the adhesive is disabled, the cloth bonding apparatus 1 stops the gear pump 35 and closes the third channel 53. Thus, the adhesive is not discharged from the nozzle 45. Since the adhesive is not discharged from the nozzle 45 when the lower cloth 152 is not present under the nozzle 45, the adhesive does not adhere to the bed portion 11.

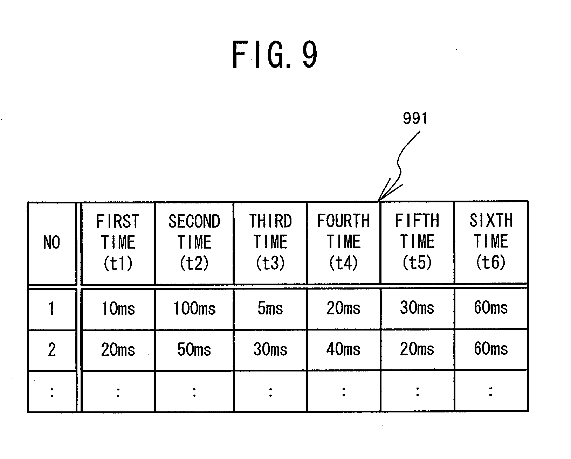

A time table 991 stored in the storage device 99 will be described with reference to FIG. 9. The time table 991 stores therein a first time (t1) to a sixth time (t6). The first time (t1) indicates a time period from a point of time when the worker steps on and presses down the pedal 206 (hereinafter referred to as "pressing start point of time") until a time when feeding of the cloths is started. The second time (t2) indicates a time period from the pressing start point of time until a time when supply of the adhesive is started. The third time (t3) indicates a time period from the pressing start point of time until a time when the third channel 53 is opened. The fourth time (t4) indicates a time period from a point of time when the worker stop pressing down the pedal 206 (hereinafter referred to as "pressing stop point of time") until a time when feeding of the cloths is stopped. The fifth time (t5) indicates a time period from the pressing stop point of time until a time when supply of the adhesive is stopped. The sixth time (t6) indicates a time period from the pressing stop point of time until a time when the third channel 53 is closed. Above combinations of the first time (t1) to the sixth time (t6) may be stored depending on the type of the adhesive. As shown in FIG. 9, the storage device 99 stores therein the combinations of the first time (t1) to the sixth time (t6) (hereinafter referred to as "control time sets") for two types of adhesives.

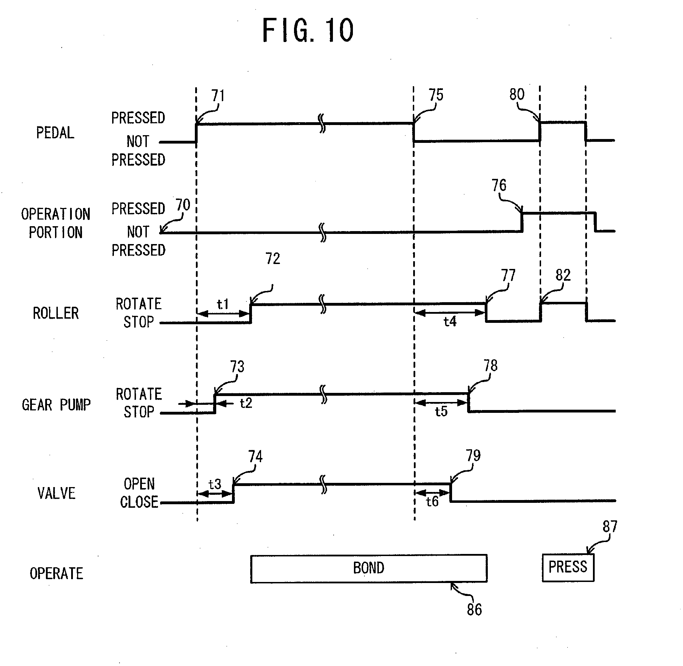

Each operation timing according to the first embodiment will be described with reference to FIG. 10. In a case where the worker inputs the type of the adhesive set in the bonding machine 2 through the keys 209, one of the control time sets of the time table 991 is determined depending on the type of the adhesive input. The worker stops the pressing of the operation portion 47 (70). The worker steps on and presses down the pedal 206 (71). The gear pump 35 starts supplying the adhesive after the second time (t2) has elapsed since the pressing start point of time (73). The valve 55 opens the third channel 53 after the third time (t3) has elapsed after the pressing start point of time (74). Since the gear pump 35 is supplying the adhesive, the adhesive is discharged from the nozzle 45. The adhesive discharged from the nozzle 45 adheres onto the cloth. The rollers 24 and 25 start feeding the cloths after the first time (t1) has elapsed since the pressing start point of time (72). The rollers 24 and 25 press and bond the cloths (86).

Since the exhibits a flowing behavior according to the material characteristics of the adhesive, the timing for discharging the adhesive from the nozzle 45 may vary depending on the material characteristics of the adhesive. The cloth bonding apparatus 1 can individually set the timings for operating the rollers 24 and 25, the gear pump 35 and the valve 55 depending on the material characteristics of the adhesive. Thus, even in a case where another adhesive having different material characteristic is used, the cloth bonding apparatus 1 can discharge the other adhesive onto a desired position.

As the cloth ends approach the nozzle 45, the worker stops pressing the pedal 206 in order to stop discharging the adhesive (75). The valve 55 closes the third channel 53 after the sixth time (t6) has elapsed since the pressing stop point of time (79). Thus, discharging of the adhesive stops. The gear pump 35 ends supplying the adhesive after the fifth time (t5) has elapsed since the pressing stop point of time (78). The rollers 24 and 25 stop feeding the cloths after the fourth time (t4) has elapsed since the pressing stop point of time (77). Even in a case where another adhesive having different material characteristics is used, the cloth bonding apparatus 1 can stop discharging the other adhesive at a desired timing.

As shown in FIG. 2, slight distances are provided in the back-and-forth direction between the nozzle 45 and the rollers 24 and 25. A section of the cloths extending between the nozzle 45 and the rollers 24 and 25 has the adhesive that has been discharged from the nozzle 45 and applied therebetween , but has not yet been pressed by the rollers 24 and 25.

The worker presses down the operation portion 47. The cloth bonding apparatus 1 disables discharging of the adhesive (76). Thereafter, in a case where the worker steps on and presses down the pedal 206 again (80), the rollers 24 and 25 start feeding the cloths (82). The rollers 24 and 25 press and bond the cloths up to the cloth ends (87). Since the gear pump 35 and the valve 55 are not driven after the worker steps on and presses down the pedal 206 again, the adhesive is not discharged from the nozzle 45. Since the adhesive is not discharged from the nozzle 45 in a case where no cloth is present under the nozzle 45, the adhesive does not adhere to the bed portion 11.

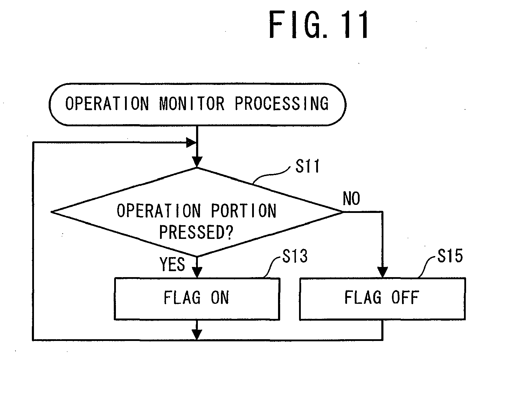

An operation monitor processing and a main control processing of the cloth bonding apparatus 1 will be described with reference to Figs. 11 to 15. The CPU 201 performs the operation monitor processing and the main control processing while sequentially switching the same at a predetermined cycle.

The operation monitor processing will be described with reference to Fig. 11. In a case where the worker presses down the operation portion 47 and disables discharging of the adhesive (S 11: YES), the CPU 201 sets a flag stored in the RAM 203 to ON (S13). The processing returns to step S 11. In a case where the worker stops pressing the operation portion 47 (S 11: NO), the CPU 201 sets the flag to OFF (S 15). The processing returns to step S 11.

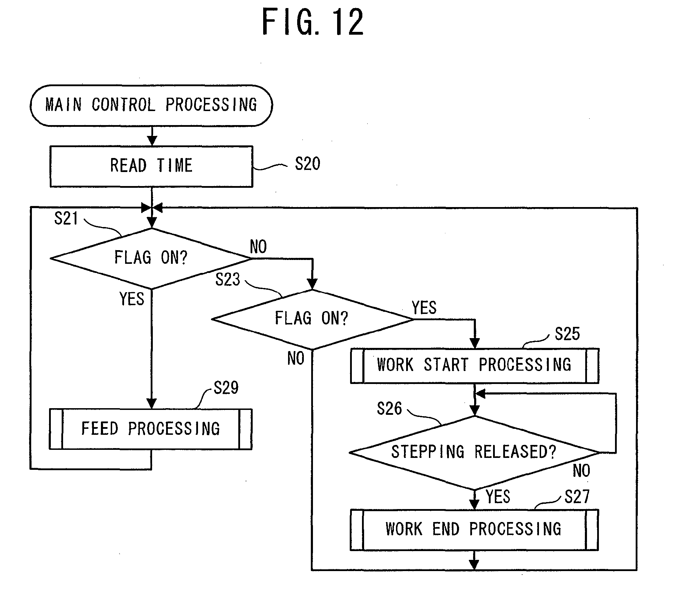

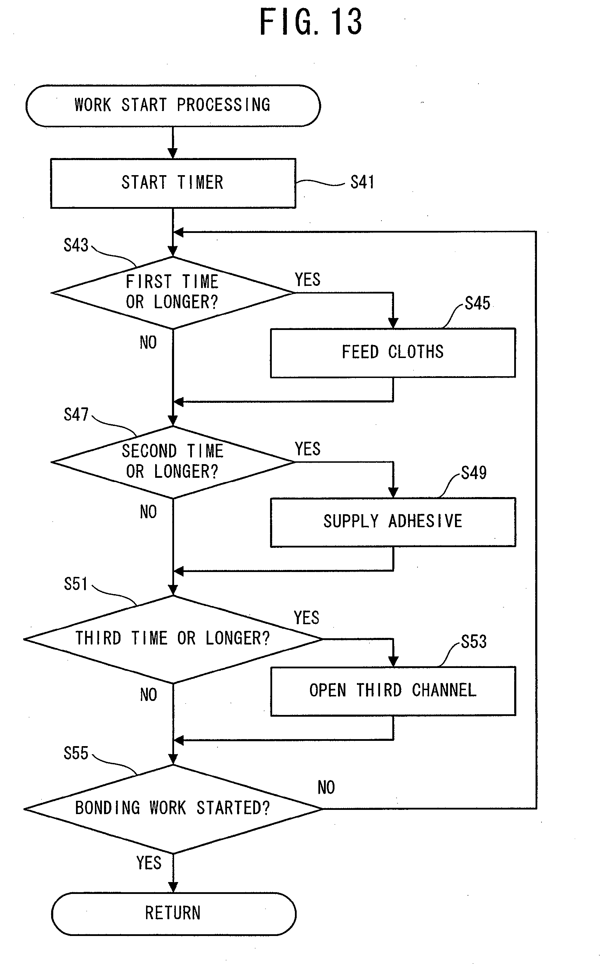

The main control processing will be described with reference to FIGS. 12 to 15. The worker inputs the type of the adhesive through the keys 209. The CPU 201 reads from the storage device 99 the first to sixth times of the control time set selected in accordance with the type of the adhesive and temporarily stores the times in the RAM 203 so that they can be used in a work start processing and a work end processing (S20). The CPU 201 determines based on the flag stored in the RAM 203 (S21), and whether or not the adhesive should be discharged. In a case where the flag is OFF (S21: NO), the CPU 201 determines whether or not the worker has stepped on and pressed down the pedal 206 (S23). In a case where the worker has stepped on and pressed down the pedal 206 (S23: YES), the CPU 201 performs the work start processing (see FIG. 13) (S25). In a case where the worker has not stepped on and pressed down the pedal 206 (S23: NO), the CPU 201 returns to the processing in step S21.

The work start processing will be described with reference to FIG. 13. The CPU 201 starts updating a timer value stored in the RAM 203 (S41). The CPU 201 specifies an elapsed time since the pressing start point of time based on the timer value. In a case where the elapsed time is the first time or longer (S43: YES), the CPU 201 rotates the motors 92 and 93. Thus, the rollers 24 and 25 are driven to feed the cloths (S45). Thereafter, the processing proceeds to step S47. In a case where the elapsed time is shorter than the first time (S43: NO), the CPU 201 proceeds to the processing in step S47.

In a case where the elapsed time is the second time or longer (S47: YES), the CPU 201 rotates the first motor 91. Thus, the gear pump 35 is driven to supply the nozzle 45 with the adhesive (S49). Thereafter, the processing proceeds to step S51. In S47, when the elapsed time is shorter than the second time (S47: NO), the CPU 201 proceeds to the processing in step S51.

In a case where the elapsed time is the third time or longer (S51: YES), the CPU 201 controls the valve opening/closing cylinder 49. The valve 55 is driven to open the third channel 53 (S53). Thereafter, the CPU 201 proceeds to the processing in step S55. In a case where the elapsed time is shorter than the third time (S51: NO), the CPU 201 proceeds to the processing in step S55.

When the gear pump 35 is being driven and the third channel 53 is open, the adhesive is discharged from the nozzle 45 and adheres onto the cloth. When the rollers 24 and 25 are driven, the rollers 24 and 25 press and feed the cloths to bond them to each other.

The CPU 201 determines whether or not all the motors 91 to 93 are rotated and the third channel 53 is opened, namely, the bonding work has started (S55). In a case where any of the motors 91 to 93 is not rotated or in a case where the third channel 53 is closed (S55: NO), the CPU 201 returns to the processing in step S43.
In a case where all the motors 91 to 93 are rotated and the third channel 53 is open (S55: YES), the CPU 201 ends updating the timer value. The work start processing ends and the processing returns to the main control processing (FIG. 12).

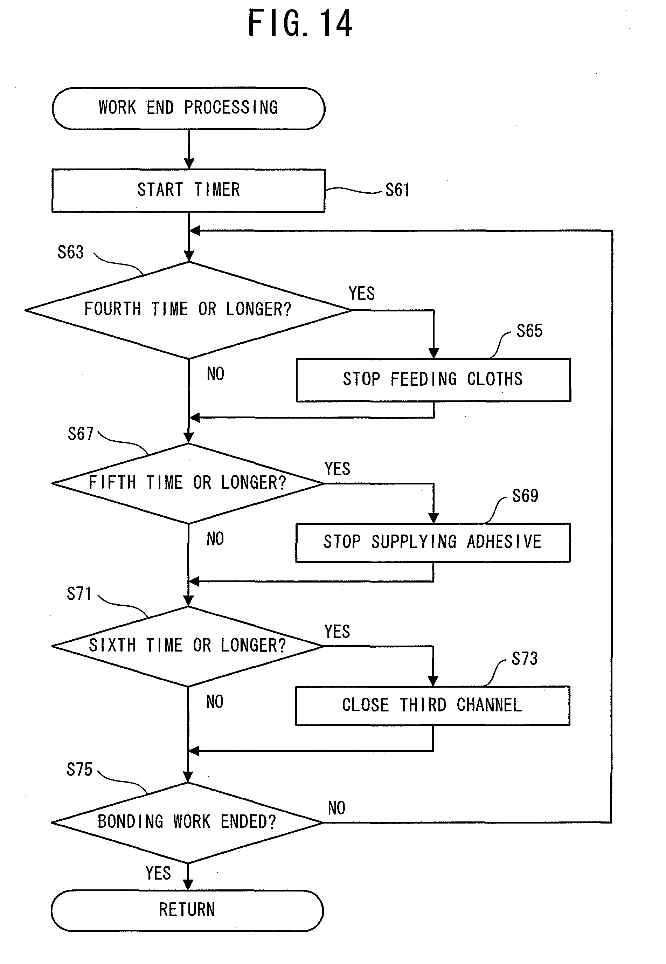

As shown in FIG. 12, the CPU 201 determines whether or not the worker has stopped pressing the pedal 206 (S26) after the work start processing (S25) ended. In a case where the worker is still pressing down the pedal 206 (S26: NO), the CPU 201 returns to the processing in step S26. In a case where the worker has stopped pressing the pedal 206 (S26: YES), the CPU 201 performs the work end processing (see FIG. 14) (S27).

The work end processing will be described with reference to FIG. 14. The CPU 201 starts updating the timer value stored in the RAM 203 (S61). The CPU 201 measures an elapsed time since the pressing stop point of time based on the timer value. In a case where the elapsed time is the fourth time or longer (S63: YES), the CPU 201 stops the rotation of the motors 92 and 93. The rollers 24 and 25 stop feeding the cloths (S65). The CPU 201 proceeds to the processing in step S67. In a case where the elapsed time is shorter than the fourth time (S63: NO), the CPU 201 proceeds to the processing in step S67.

In a case where the elapsed time is the fifth time or longer (S67: YES), the CPU 201 stops the rotation of the first motor 91. Thus, the gear pump 35 stops supplying the nozzle 45 with the adhesive (S69). Thereafter, the CPU 201 proceeds to the processing in S71. In a case where the elapsed time is shorter than the fifth time (S67: NO), the CPU 201 proceeds to the processing in step S71.

In a case where the elapsed time is the sixth time or longer (S71: YES), the CPU 201 drives the valve 55. Thus, the third channel 53 is closed (S73). Thereafter, the CPU 201 proceeds to the processing in step S75. In a case where the elapsed time is shorter than the sixth time (S71: NO), the CPU 201 proceeds to the processing in S75.

The CPU 201 determines whether or not all the motors 91 to 93 has stopped rotating and the third channel 53 is closed, namely, the bonding work has ended (S75). In a case where any of the motors 91 to 93 is rotating or in a case where the third channel 53 is open (S75: NO), the CPU 201 returns to the processing in step S63. In a case where all the motors 91 to 93 have stopped rotating and the third channel 53 is closed (S75: YES), the CPU 201 ends updating the timer value. The work end processing ends and the processing returns to the main control processing (FIG. 12). As shown in FIG. 12, the CPU 201 returns to the processing in step S21 after the work end processing (S27).

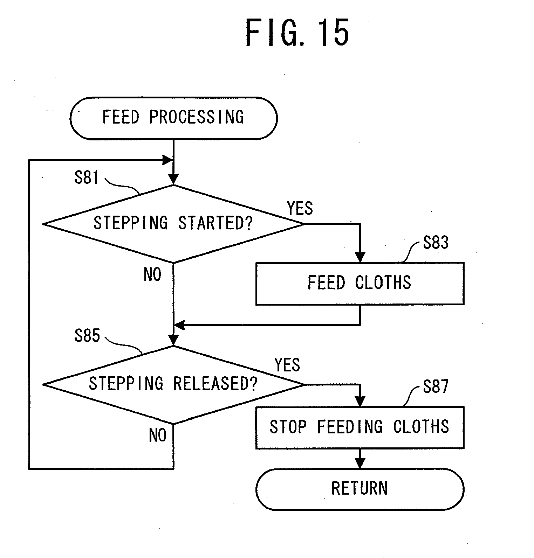

In a case where the flag stored in the RAM 203 is ON, the worker has disabled discharging the adhesive (S21: YES). The CPU 201 performs a feed processing (see FIG. 15) (S29). The feed processing will be described with reference to FIG. 15. In a case where the worker steps on and presses down the pedal 206 (S81: YES), the CPU 201 rotates the motors 92 and 93. The rollers 24 and 25 are driven to feed the cloths (S83). The rollers 24 and 25 press and bond the cloths.
The adhesive is not discharged from the nozzle 45. The CPU 201 proceeds to the processing in step S85. In a case where the worker has not stepped on and pressed down the pedal 206 (S81: NO), the CPU 201 proceeds to the processing in step S85.

The CPU 201 determines whether or not pressing on the pedal 206 has been stopped since the worker start pressing the pedal 206 (S85). In a case where the worker has stepped on and pressed down the pedal 206 and then released the pedal 206 (S85: YES), the CPU 201 stops the rotation of the motors 92 and 93. The rollers 24 and 25 stop feeding the cloths (S87). The CPU 201 ends the feed processing and returns to the main control processing (see FIG. 12). In a case where the worker has not stopped pressing down the pedal 206 (S85: NO), the CPU 201 returns to the processing in step S81.

As described above, the cloth bonding apparatus 1 can individually set control timings for controlling the rollers 24 and 25, the gear pump 35 and the valve 55 depending on the type of the adhesive. The cloth bonding apparatus 1 can accurately discharge the adhesive onto a desired position.

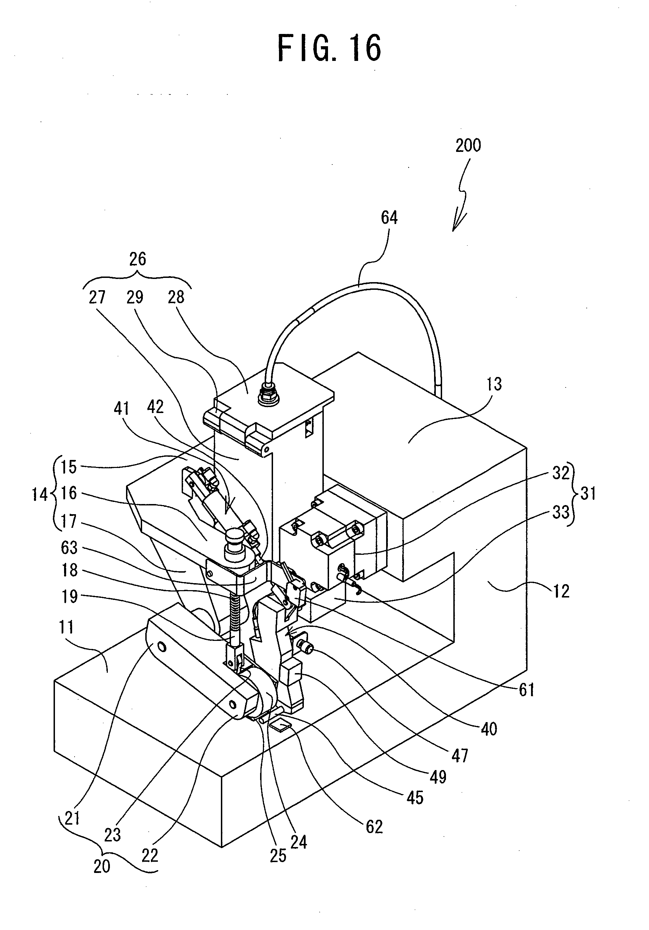

A second embodiment of the present invention will be described with reference to FIGS. 16 to 21. According to the second embodiment, a bonding machine 200 includes a cloth end sensor 61 for detecting the cloth ends. The bonding machine 200 determines a timing for ending the bonding work based on the detection of the cloth ends.

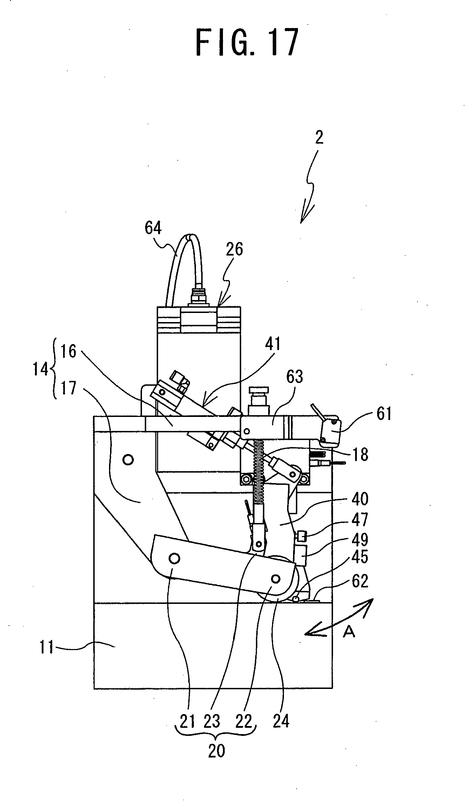

A configuration of the bonding machine 200 according to the second embodiment will be described with reference to FIGS. 16 and 17. The same reference numerals are denoted to the same components of the bonding machine 2 according to the first embodiment and the explanations thereof will be omitted. The bonding machine 200 includes a fixing jig 63 provided at the front end of the spring support portion 16. The fixing jig 63 has a plate shape. The rear end of the fixing jig 63 is connected to the left side end of the spring support portion 16. The fixing jig 63 extends forward, bends rightward at its front end and extends rightward, and bends forward at its right end and extends forward.

The cloth end sensor 61 is provided on the front end of the fixing jig 63. The cloth end sensor 61 includes a light emitting portion and a light detection portion. A reflection plate 62 is provided at the bed portion 11 in the vicinity of the front of the nozzle 45. The light emitting portion of the cloth end sensor 61 emits a light toward the reflection plate 62. The reflection plate 62 reflects the light emitted from the cloth end sensor 61. The light detection portion of the cloth end sensor 61 detects the light reflected on the reflection plate 62. The bonding machine 200 determines whether or not a cloth is present above the reflection plate 62 by the cloth end sensor 61.

An electric configuration of the bonding machine 200 will be described. The electric configuration of the second embodiment is different from that of the first embodiment in that the cloth end sensor 61 is connected to the CPU 201. In a case where the light detection portion of the cloth end sensor 61 has detected a reflected light, the CPU 201 determines that no cloths are present above the reflection plate 62. In a case where the light detection portion of the cloth end sensor 61 did not detect the reflected light, the CPU 201 determines that the cloths are present above the reflection plate 62.

The storage device 99 stores a distance by which the cloths are to be fed from the point of time when the cloth end sensor 61 detects the cloth ends (hereinafter referred to as "first feeding distance"). For example, the first feeding distance may be set to be slightly shorter than a distance between the reflection plate 62 and the nozzle 45. However the first feeding distance is not limited to such a value. The storage device 99 stores therein the time table (see FIG. 9). In the second embodiment, the fourth to sixth times indicate the control timings with reference to the point of time when the cloths are fed by the first feeding distance (hereinafter referred to as "first feed point of time") after the cloth end sensor 61 detects the cloth ends.

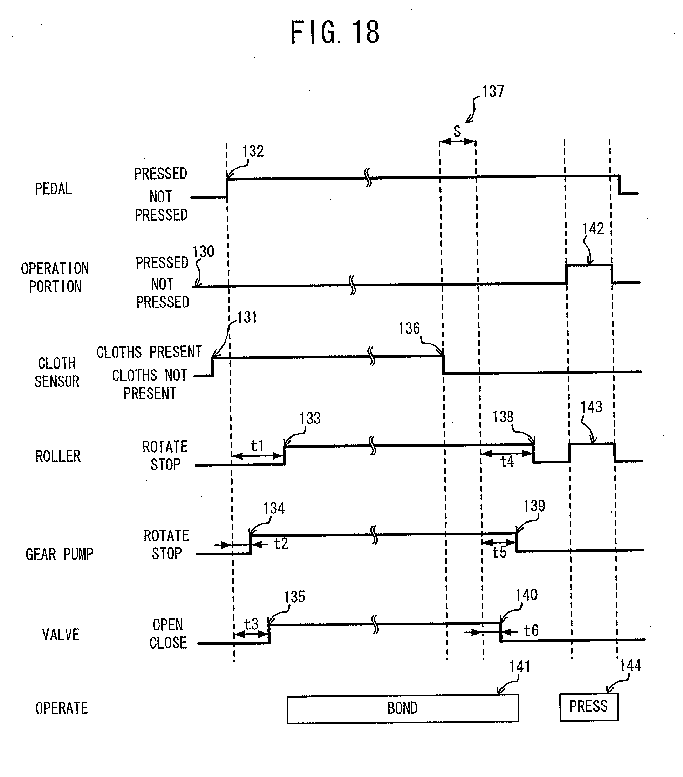

Each operation timing according to the second embodiment will be described with reference to FIG. 18. The worker stops the pressing on the operation portion 47 (130). The worker places the cloths on the bed portion 11. The cloth end sensor 61 detects the cloths (131). The worker steps on and presses down the pedal 206 (132). After the second time (t2) has elapsed since the pressing start point of time, the gear pump 35 starts supplying the adhesive (134). After the third time (t3) has elapsed since the pressing start point of time, the valve 55 opens the third channel 53 (135). Since the gear pump 35 is supplying the adhesive, the adhesive is discharged from the nozzle 45. After the first time (t1) has elapsed since the pressing start point of time, the rollers 24 and 25 start feeding the cloths (133). The rollers 24 and 25 press the cloths and thus the bonding work starts (141).

The rollers 24 and 25 feed the cloths and the cloths pass above the reflection plate 62. In a case where the cloths are not present above the reflection plate 62 any more, the cloth end sensor 61 detects the cloth ends (136). The rollers 24 and 25 feed the cloths for a predetermined time (S) after the point of time when the cloth end sensor 61 has detected the cloth ends (hereinafter referred to as "detection point of time") in order to feed the cloths by the first feeding distance stored in the storage device 99 (137).

The first feeding distance is slightly shorter than the distance between the reflection plate 62 and the nozzle 45. The bonding machine 200 additionally moves the cloths by the first feeding distance after the detection point of time while the adhesive is discharged. Thus, the bonding machine 200 continuously discharges the adhesive up to the vicinity of the cloth ends.

After the sixth time (t6) has elapsed from the first feed point of time, the valve 55 closes the third channel 53 (140). Since the bonding machine 200 closes the third channel 53, discharging of the adhesive stops. After the fifth time (t5) has elapsed after the first feed point of time, the gear pump 35 ends supplying the adhesive (139). After the fourth time (t4) has elapsed after the first feed point of time, the rollers 24 and 25 stop feeding the cloths (138). When the cloth end sensor 61 has detected the cloth ends, the bonding machine 200 can automatically end discharging of the adhesive (141). Thus, even in a case where the worker keeps stepping on and pressing down the pedal 206 without being aware of the cloth ends, the adhesive does not adhere onto the bed portion 11.

The worker presses down the operation portion 47 (142). The worker keeps pressing down the pedal 206. Thus, the rollers 24 and 25 are driven to feed the cloths (143). The gear pump 35 and the valve 55 are not driven and thus the adhesive is not discharged from the nozzle 45. Thus, the bonding machine 200 can press and bond the cloths up to the cloth ends and can prevent the adhesive from adhering onto the bed portion 11 (144).

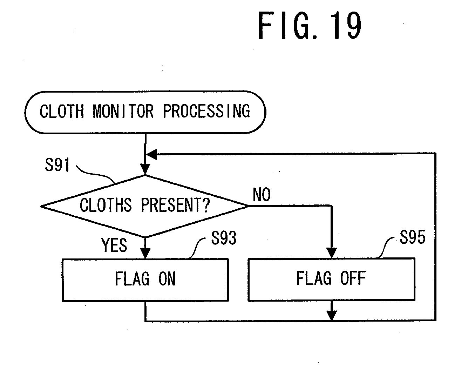

A cloth monitor processing and a main control processing for the bonding machine 200 will be described with reference to FIGS. 19 to 21. The CPU 201 performs the cloth monitor processing and the main control processing while sequentially switching the same at a predetermined cycle.

The cloth monitor processing will be described with reference to FIG. 19. The CPU 201 determines whether or not the cloths are present above the reflection plate 62 (S91). In a case where the light detection portion of the cloth end sensor 61 does not detect a reflected light, the CPU 201 determines that the cloths are present above the reflection plate 62 (S91: YES). The CPU 201 sets the flag stored in the RAM 203 to ON (S93). The CPU 201 returns to the processing in step S91. In a case where the light detection portion of the cloth end sensor 61 has detected a reflected light, the CPU 201 determines that no cloths are present above the reflection plate 62 (S91: NO). The CPU 201 sets the flag to OFF (S95). The CPU 201 returns to the processing in step S91.

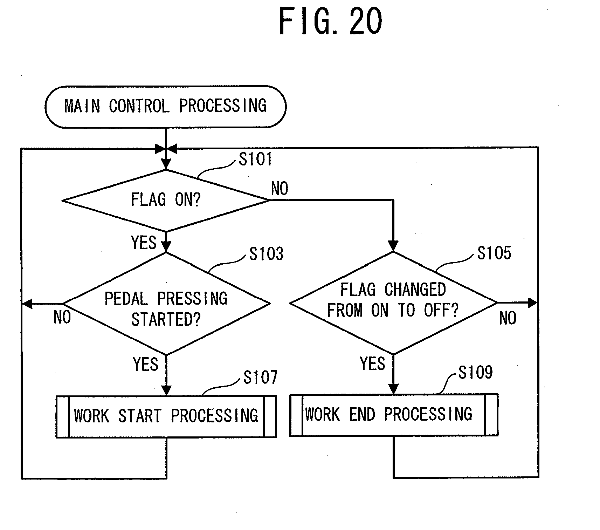

The main control processing will be described with reference to FIG. 20. The CPU 201 determines whether or not the cloths are present above the reflection plate 62 based on the flag stored in the RAM 203. In a case where the flag is ON, the cloths are determined to be present above the reflection plate 62. In a case where the flag is OFF, the cloths are determined not to be present above the reflection plate 62. In a case where the flag is ON (S101: YES), the CPU 201 determines whether or not the worker has started pressing down the pedal 206 and the bonding work has started (S103). In a case where the worker has not stepped on and pressed down the pedal 206 (S103: NO), the CPU 201 returns to the processing in step S101. In a case where the worker has stepped on and pressing down the pedal 206 (S103: YES), the CPU 201 performs the work start processing (S107). The work start processing is the same as that of the first embodiment. The processing returns to step S101 after the work start processing.

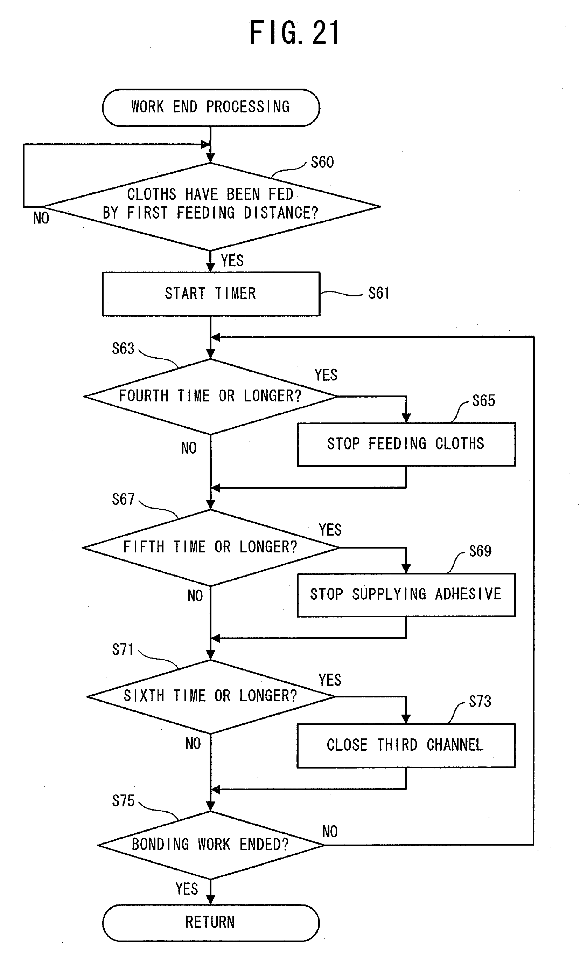

In a case where the flag is OFF (S101: NO), the CPU 201 determines whether or not the flag has just changed from ON to OFF (S105). In a case where the flag has just changed from ON to OFF, the CPU 201 determines that the cloth end sensor 61 has detected the cloth ends (S105: YES), and performs a work end processing (see FIG. 21) (S109). In a case where the flag has not been changed from ON to OFF (S105: NO), the CPU 201 returns to the processing in step S 101.

The work end processing will be described with reference to FIG. 21. The CPU 201 determines whether or not the cloths have been fed by the first feeding distance since the detection point of time (S60). The CPU 201 divides the first feeding distance by the cloth feed speed to calculate a feed time. The CPU 201 determines whether or not the cloths have been fed by the first feeding distance based on the elapsed time since the detection point of time. In a case where the cloths have not been fed by the first feeding distance (S60: NO), the CPU 201 returns to the processing in step S60.

In a case where the cloths have been fed by the first feeding distance since the detection point of time (S60: YES), the CPU 201 starts updating the timer value stored in the RAM 203 (S61). The CPU 201 measures the elapsed time since the first feed point of time based on the timer value.

In a case where the elapsed time is the fourth time or longer (S63: YES), the CPU 201 stops driving the rollers 24 and 25 (S65). The bonding machine 200 stops driving the rollers 24 and 25 so that feeding of the cloths stops. In a case where the elapsed time is the fifth time or longer (S67: YES), the CPU 201 stops driving the gear pump 35 (S69). The gear pump 35 stops supplying the adhesive. In a case where the elapsed time is the sixth time or longer (S71: YES), the CPU 201 drives the valve 55 to close the third channel 53 (S73).

As described above, the cloth end sensor 61 detects cloth ends. The bonding machine 200 controls the motors 91 to 93 and the valve opening/closing cylinder 49 based on the detection point of time. In a case where no cloths are present under the nozzle 45, the bonding machine 200 does not discharge the adhesive from the nozzle 45. Thus, the adhesive does not adhere to the bed portion 11.

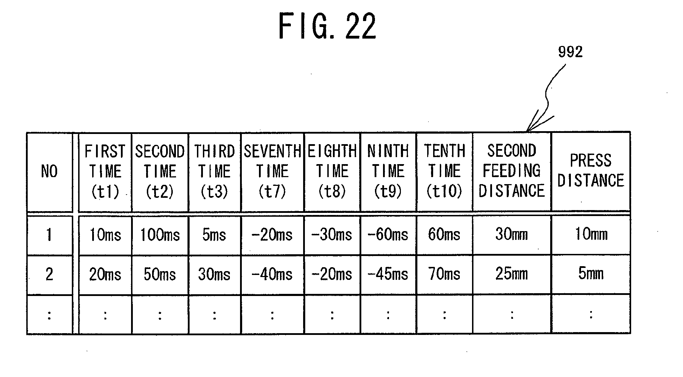

A third embodiment of the present invention will be described with reference to FIGS. 22 to 25. According to the third embodiment, the cloth bonding apparatus 1 determines the timing for ending the bonding work based on a condition that the cloths have been fed by a predetermined distance (second feeding distance) after the detection point of time.

A time table 992 stored in the storage device 99 will be described with reference to FIG. 22. The first time (t1) to the third time (t3) are the same as those in the first and second embodiments.

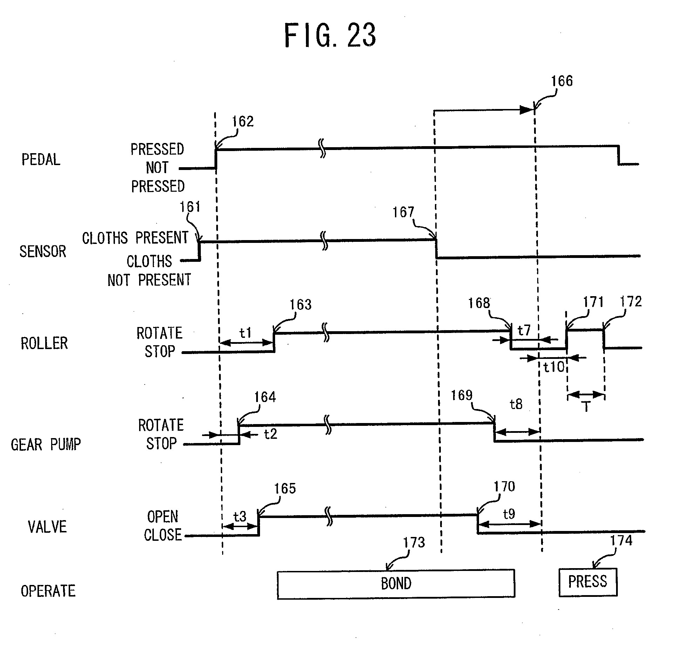

Numeral 166 in FIG. 23 indicates a point of time at which the cloths have been fed by the second feeding distance since the detection point of time (hereinafter referred to as "second feed point of time"). A seventh time (t7) indicates a time period from the second feed point of time until the time when feeding of the cloths is stopped. An eighth time (t8) indicates a time period from the second feed point of time until the time when supplying of the adhesive is stopped. A ninth time (t9) indicates a time period from the second feed point of time until the time when the third channel 53 is closed. A tenth time (t10) indicates a time period from the second feed point of time until the time when feeding of the cloths is resumed. A press distance indicates a feeding distance when the rollers 24 and 25 are driven while the adhesive is not being discharged. In FIG. 22, negative values are set for the seventh time (t7) to the ninth time (t9). The negative values indicate a point of time before the second feed point of time. For example, the seventh time (t7) is "-20 ms", which indicates that the time period from the seventh time until the second feed point of time is 20 millisecond. A substantially same value may be set for the second feeding distance as the distance between the reflection plate 62 and the nozzle 45. However, the second feeding distance is not limited to such value.

Each operation timing according to the third embodiment will be described with reference to FIG. 23. The bonding work start operation is the same as that of the first embodiment and thus the explanations thereof will be omitted.

The cloth end sensor 61 detects the cloth ends (167). The bonding machine 200 continuously performs the bonding work. When the time period until the second feed point of time (166) is the ninth time (t9), the valve 55 closes the third channel 53 (170). When the time period until the second feed point of time (166) is the eighth time (t8), the gear pump 35 ends supplying the adhesive (169). When the time until the second feed point of time (166) is the seventh time (t7), the rollers 24 and 25 end feeding the cloths (168).

As described above, the second feeding distance is substantially the same as the distance between the reflection plate 62 and the nozzle 45. The bonding machine 200 can continue the bonding work for a predetermined time (from the seventh time to the ninth time) since the point of time when the cloth ends pass under the nozzle 45 and the cloth is not present under the nozzle 45 any more. The bonding machine 200 can reliably discharge the adhesive onto the cloth while the cloth is present under the nozzle 45. The bonding machine 200 can reliably stop discharging the adhesive at the point of time when the cloth is not present under the nozzle 45. Thus, the adhesive dos not adhere to the bed portion 11.

When the elapsed time after the second feed point of time (166) reaches the tenth time (t10), the bonding machine 200 drives the rollers 24 and 25 to resume feeding the cloths (171). The gear pump 35 and the valve 55 are not driven. Thus, the adhesive is not discharged from the nozzle 45. The bonding machine 200 feeds the cloths for a predetermined time (T) and feeds the cloths by the press distance. After pressing and bonding the cloths by the press distance, the cloth bonding apparatus 1 stops feeding the cloths (172). Thus, the cloth bonding apparatus 1 can reliably bond the cloths up to the cloth ends without need for the user to operate the operation portion 47 (174).

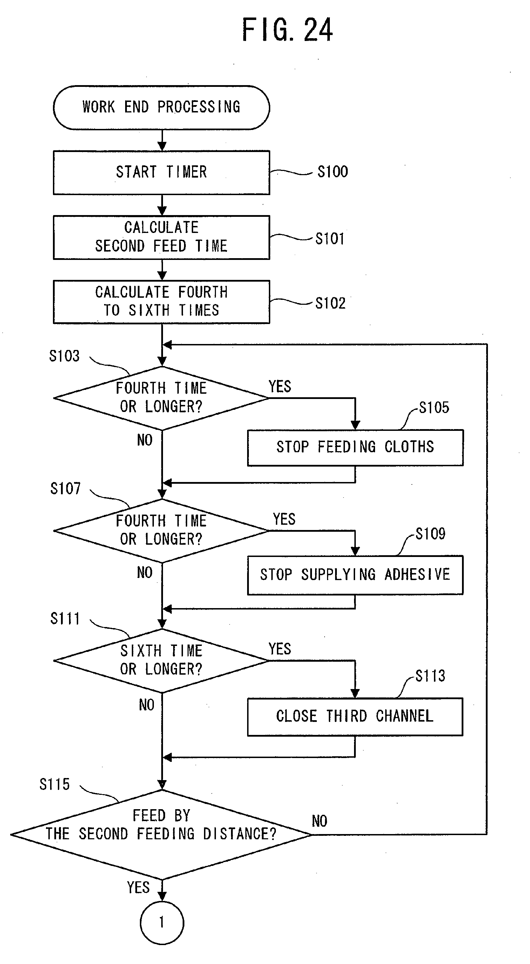

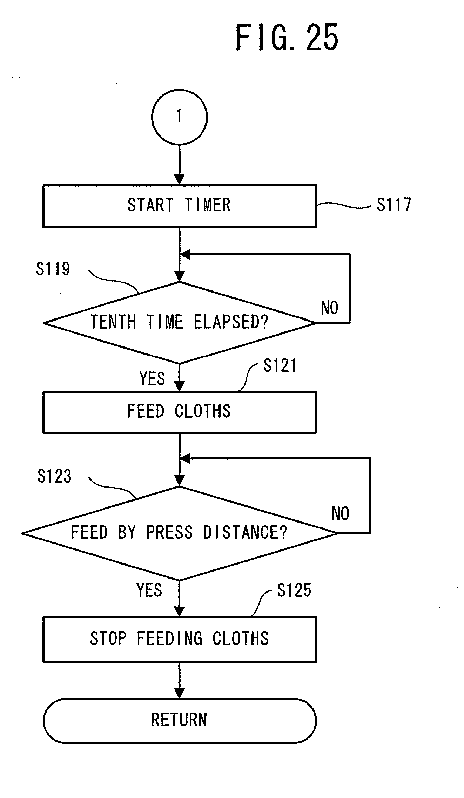

A work end processing according to the third embodiment will be described with reference to FIGS. 24 and 25. The cloth monitor processing and the main control processing are the same as those according to the second embodiment.

The CPU 201 starts updating the timer value stored in the RAM 203 (S100). The CPU 201 measures an elapsed time since the detection point of time based on the timer value.

The CPU 201 divides the second feeding distance stored in the time table by the cloth feed speed. The CPU 201 calculates the time from the detection point of time to the second feed point of time (hereinafter referred to as "second feed time") (S101). The CPU 201 adds the seventh time to the ninth time stored in the time table to the calculated second feed time. The CPU 201 determines whether or not a remaining time period until the second feed point of time is shorter than each time period of the seventh time to the ninth time based on the determination of whether or not each calculation result of the addition is the elapsed time or longer. The calculation results indicate the time from the detection point of time to the time to control the rollers 24 and 25, the gear pump 35 and the valve 55, respectively. The calculation results correspond to the fourth time to the sixth time, respectively, in a case where the reference of the elapsed time is replaced with the detection point of time. Thus, the CPU 201 calculates the fourth time to the sixth time in a case where the reference of the elapsed time is replaced with the detection point of time, based on the seventh time to the ninth time (S102). In the following, the values calculated from the seventh time to the ninth time are referred to as the fourth time to the sixth time, respectively.

In a case where the elapsed time is the fourth time or longer (S103: YES), the CPU 201 stops driving the rollers 24 and 25 so that feeding of the cloths stops (S105). The CPU 201 proceeds to the processing in step S107. In a case where the elapsed time is shorter than the fourth time (S103: NO), the CPU 201 proceeds to the processing in step S107.

In a case where the elapsed time is the fifth time or longer (S107: YES), the CPU 201 stops driving the gear pump 35. The gear pump 35 stops supplying the adhesive (S109). The CPU 201 proceeds to the processing in step S111. In a case where the elapsed time is shorter than the fifth time (S107: NO), the CPU 201 proceeds to the processing in step S111.

In a case where the elapsed time is the sixth time or longer (S111: YES), the CPU 201 drives the valve 55 to close the third channel 53 (S113). The CPU 201 proceeds to the processing in step S 115. In a case where the elapsed time is shorter than the sixth time (S111: NO), the CPU 201 proceeds to the processing in step S 115.

The CPU 201 determines whether or not the cloths have been fed by the second feeding distance since the detection point of time (S115). In a case where the cloths have not been fed by the second feeding distance (S115: NO), the CPU 201 returns to the processing in step S103. In a case where the cloths have been fed by the second feeding distance (S 115: YES), the CPU 201 proceeds to the processing in step S 117 (see FIG. 25).

As shown in FIG. 25, the CPU 201 resets the timer value, and updates the timer value stored in the RAM 203 (S 117). The CPU 201 measures an elapsed time since the second feed point of time, based on the timer value. The CPU 201 determines whether or not the elapsed time is the tenth time or longer (S119). In a case where the elapsed time is shorter than the tenth time (S 119: NO), the CPU 201 returns to the processing in step S 119. In a case where the elapsed time is the tenth time or longer (S 119: YES), the CPU 201 drives the motors 92 and 93 to thereby drive the rollers 24 and 25 and to resume feeding the cloths (S121).

The CPU 201 determines whether or not the cloths have been fed by the press distance since the cloth feeding was resumed (S123). The CPU 201 divides the press distance by the cloth feed speed to thereby calculate the press time. The CPU 201 determines whether or not the cloths have been fed by the press distance based on the elapsed time since the update of the timer value is started. In a case where the cloths have not been fed by the press distance (S123: NO), the CPU 201 returns to the processing in step S123. In a case where the cloths have been fed by the press distance (S123: YES), the CPU 201 stops driving the motors 92 and 93 so that the rollers 24 and 25 stop feeding the cloths (S125). The CPU 201 ends the work end processing and returns to the main control processing (see FIG. 20).

As described above, the bonding machine 200 calculates the fourth time to the sixth time based on the second feeding distance and the seventh time to the ninth time. The cloth bonding apparatus 1 calculates the fourth time to the sixth time with reference to the second feed point of time at which the cloth is not present under the nozzle 45 any more. Thus, the bonding machine 200 can reliably discharge the adhesive onto the cloth while the cloth is present under the nozzle 45.

The worker may input a desired value for the above-described first to the ninth times, the first feeding distance, the second feeding distance and the press distance through the keys 209, and change the stored values in the time table 991 or 992.

The worker can change the timing for each control after the detection point of time by changing the first feeding distance and the second feeding distance. Thus, the worker does not have to change the fourth time to the sixth time individually. For example, in a case where the worker changes an arrangement of the cloth end sensor 61 and the reflection plate 62, the distance between the nozzle 45 and the reflection plate 62 changes. The worker has to change the fourth time to the sixth time, respectively. However, in the bonding machine 200, the worker can adjust the time from the detection point of time until the end of the bonding work at once by changing the first feeding distance.

The upper feed roller 24 and the lower feed roller 25 in FIG. 2 correspond to the "feeding portion" of the present invention. The valve 55 in FIG. 6 corresponds to the "opening/closing portion" of the present invention and the third channel 53 corresponds to the "channel" of the present invention. The gear pump 35 in FIG. 5 corresponds to the "supply portion" of the present invention. The pedal 206 in FIG. 1 corresponds to the "first input portion" of the present invention. The CPU 201 that performs the processing in S41 in FIG. 13 corresponds to the "first measurement portion" of the present invention and the CPU 201 that performs the processings in S45, S49 and S53 corresponds to the "start control portion" of the present invention. The CPU 201 that performs the processing in S61 in FIGS. 14 and 21 corresponds to the "second measurement portion" of the present invention. The CPU 201 that performs the processings in S65, S69 and S73 in FIGS. 14 and 21 corresponds to the "end control portion" of the present invention. The cloth end sensor 61 in FIG. 16 corresponds to the "detection portion" of the present invention. The storage device 99 in FIG. 7 storing therein the first feeding distance and the second feeding distance corresponds to the "first storage portion" of the present invention. The CPU 201 that performs the processing in S60 in FIG. 21 corresponds to the "determination portion" of the present invention. The storage device 99 in FIG. 7 storing therein the time table corresponds to the "second storage portion" and the "third storage portion" of the present invention. The CPU 201 that performs the processing in S20 of FIG. 12 corresponds to the "adhesive input portion" of the present invention. The CPU 201 that performs the processing in S101 of FIG. 24 corresponds to the "calculation portion" of the present invention and the CPU 201 that performs the processing in S102 corresponds to the "specification portion" of the present invention. The key 209 in FIG. 1 corresponds to the "second input portion" and the "third input portion" of the present invention and the CPU 201 that performs processing in S89 of FIG. 26 corresponds to the "distance storage control portion" and the "time storage control portion" of the present invention. The second feed time calculated in the processing in S101 of FIG. 24 corresponds to the "reference time" of the present invention and the second reference point of time specified in the processing in S102 corresponds to the "reference point of time" of the present invention.

The present invention is not limited to the above embodiments and may be variously modified within the scope of the claims. The bonding machine 200 determines whether or not the cloths are present above the reflection plate 62, based on whether or not the cloth end sensor 61 can detect the reflected light from the reflection plate 62. However, the present invention is not limited thereto. The cloth end sensor 61 may be of any other type. For example, a contact sensor may be employed. The arrangement of the cloth end sensor 61 is not limited to the above arrangement. The cloth end sensor 61 may be arranged in any other position if it is on the upstream side of the cloth feeding direction relative to the nozzle 45. For example, the cloth end sensor 61 may be arranged on the lower surface of the support portion 40.

The position of the valve 55 is not limited to the vicinity of the nozzle 45. For example, the valve 55 may be arranged on the upstream side of the gear pump 35.

In the second embodiment, control time sets are determined based on the point of time (first feed point of time) when the cloths are fed by the first feeding distance after the detection point of time. However, the present invention is not limited to the method. The cloth bonding apparatus 1 may determine the control time sets based on the detection point of time. Alternatively, each control time may be determined based on the determination of whether or not the elapsed time after the detection point of time is the fourth time to the sixth time or longer.

The cloth bonding apparatus 1 or 200 may control the timing for applying pressure into the storage chamber 26 via the hose 64 to thereby control the discharge of the adhesive. The cloth bonding apparatus 1 or 200 may adjust the timing for controlling the applying of pressure into the storage chamber 26 in addition to the timing for controlling the drive of the rollers 24 and 25, the gear pump 35 and the valve 55.

The cloth bonding apparatus 1 may determine each control timing based on the rotation frequencies of the motors 91, 92, and 93 output by the encoders 94 to 96. The cloth bonding apparatus 1 may specify the cloth feeding distance based on the rotation frequencies of the motors 91, 92, and 93 output by the encoders 94 to 96.

In the first embodiment, the cloth bonding apparatus 1 determines whether or not the first time to the sixth time have elapsed since a specific point of time, thereby determining each control timing. However, the present invention is not limited thereto. The cloth bonding apparatus 1 may determine the timing for controlling the rollers 24 and 25, the gear pump 35 and the valve 55 based on the relative time. For example, the cloth bonding apparatus 1 may control the rollers 24 and 25, the gear pump 35 and the valve 55 based on the time from the control start of the rollers 24 and 25 to the control start of the gear pump 35 and the time from the control start of the gear pump 35 to the control start of the valve 55, respectively.

Examples in which the cloth bonding apparatus bonds separate pieces of cloths together are given in the above-described embodiment and the modified embodiment. However, the cloth bonding apparatus may bond folded portions of one folded cloth.

In other words, the cloth bonding apparatus may bond two layers of cloth(s).

## Claims

1. A cloth bonding apparatus comprising:
a nozzle (45) through which an adhesive is dischargeable onto a cloth;
a feed portion (24 and 25) that is adapted to feed the cloth;
a channel (53) through which the adhesive can flow toward the nozzle;
an opening/closing portion (55) that opens and closes the channel;
a supplying portion (35) that is adapted to supply the channel with the adhesive;
a first input portion (206) through which an instruction to start or end a bonding work of bonding the cloth can be input
**characterized by**
a first measurement portion (201) that measures a first elapsed time since the instruction to start the bonding work was input through the first input portion;
a start control portion (201) that controls the feeding portion to start feeding the cloth in a case where the first elapsed time is a first time or longer, controls the supplying portion to start supplying the adhesive in a case where the first elapsed time is a second time or longer, and controls the opening/closing portion to open the channel in a case where the first elapsed time is the third time or longer;
a second measurement portion (201) that measures a second elapsed time since a predetermined point of time, after the start control portion has controlled the feeding portions, the opening/closing portion and the supplying portion; and
an end control portion (201) that controls the feeding portion to end feeding the cloth in a case where the second elapsed time is the fourth time or longer, controls the supplying portion to stop supplying the adhesive in a case where the second elapsed time is the fifth time or longer, and controls the opening/closing portion to close the channel in a case where the second elapsed time is the sixth time or longer.

2. The cloth bonding apparatus according to claim 1, wherein the predetermined point of time is when the instruction to end the bonding work is input through the first input portion.

3. The cloth bonding apparatus according to claim 1 or 2, further comprising:
a detection portion (61) that is adapted to detect whether or not the cloth is present at a predetermined position on an upstream side of the nozzle in a cloth feeding direction,
wherein the predetermined point of time is when the detection portion detects that the cloth is not present at the predetermined position.

4. The cloth bonding apparatus according to any of claims 1 to 3, further comprising:
a detection portion (61) that is adapted to detect whether or not the cloth is present at a predetermined position on an upstream side of the nozzle in a cloth feeding direction;
a first storage portion (99) that stores therein a feeding distance by which the feed portion is to feed the cloth; and
a determination portion (201) that determines whether or not the feeding portion has fed the cloth by the feeding distance since the point of time when the detection portion detected that the cloth is not present at the predetermined position any more,
wherein the predetermined point of time is when the determination portion determines that the feeding portion has fed the cloth by the feeding distance.

5. The cloth bonding apparatus according to any one of claims 1 to 4, further comprising:
a second storage portion (99) that stores therein combinations of the first time, the second time, the third time, the fourth time, the fifth time and the sixth time and a type of the adhesive in an associated manner; and
a second input portion (201) through which the type of the adhesive can be input, wherein:
the start control portion reads from the second storage portion the first time, the second time, and the third time corresponding to the type of the adhesive input through the second input portion and compares each of the first time, the second time, and the third time with the first elapsed time, and
the end control portion reads from the second storage portion the fourth time, the fifth time and the sixth time corresponding to the type of the adhesive input through the second input portion and compares each of the fourth time, fifth time, and the sixth time with the second elapsed time.

6. The cloth bonding apparatus according to any of claims 1 to 5, further comprising:
a detection portion (61) that is adapted to detect whether or not the cloth is present at a predetermined position on an upstream side of the nozzle in a cloth feeding direction;
a first storage portion (99) that stores therein a feeding distance by which the feeding portion is to feed the cloth;
a calculation portion (201) that calculates a reference time period by dividing the feeding distance stored in the first storage portion by a feed speed of the cloth to be fed by the feeding portion;
a third storage portion (99) that stores therein a seventh time for specifying a control timing of the feeding portion, an eighth time for specifying a control timing of the supplying portion and a ninth time for specifying a control timing of the opening/closing portion, the seventh time, the eighth time, and the ninth time being defined with reference to a reference point of time when the reference time period calculated by the calculation portion elapses since the detection portion detects that the cloth is not present at the predetermined position; and
a specification portion (201) that specifies the fourth time based on the reference point of time and the seventh time, specifies the fifth time based on the reference point of time and the eighth time, and specifies the sixth time based on the reference point of time and the ninth time,
wherein the end control portion controls the feeding portion, the opening/closing portion and the supplying portion based on the fourth time, the fifth time and the sixth time specified by the specification portion.

## Patentansprüche

1. Tuchfügegerät mit:
einer Düse (45), durch die ein Klebemittel auf ein Tuch ausgelassen werden kann;
einem Vorschubabschnitt (24 und 25), der daran angepasst ist, das Tuch vorzuschieben;
einem Kanal (53), durch den das Klebemittel zu der Düse strömen kann;
einem Öffnungs/Schließabschnitt (55), der den Kanal öffnet und schließt;
einem Zuführabschnitt (35), der daran angepasst ist, das Klebemittel dem Kanal zuzuführen;
einem ersten Eingabeabschnitt (206), durch den ein Befehl zum Starten oder zum Beenden eines Fügevorgangs zum Fügen des Tuches eingegeben werden kann,
**gekennzeichnet durch**
einen ersten Messabschnitt (201), der eine erste verstrichene Zeit nach dem Eingeben des Befehls zum Starten des Fügevorgangs **durch** den ersten Eingabeabschnitt misst;
einen Startsteuerabschnitt (201), der den Vorschubabschnitt zum Starten des Vorschiebens des Tuches steuert, falls die erste verstrichene Zeit eine erste Zeit oder länger ist, den Zuführabschnitt zum Starten der Zufuhr des Klebemittels steuert, falls die erste verstrichene Zeit eine zweite Zeit oder länger ist, und den Öffnungs/Schließabschnitt zum Öffnen des Kanals steuert, falls die erste verstrichene Zeit die dritte Zeit oder länger ist;
einen zweiten Messabschnitt (201), der eine zweite verstrichene Zeit nach einem vorbestimmten Zeitpunkt misst, nachdem der Startsteuerabschnitt die Vorschubabschnitte, den Öffnungs/Schließabschnitt und den Zuführabschnitt gesteuert hat; und
einen Endsteuerabschnitt (201), der den Vorschubabschnitt zum Beenden des Vorschiebens des Tuches steuert, falls die zweite verstrichene Zeit die vierte Zeit oder länger ist, den Zuführabschnitt zum Stoppen des Zuführens des Klebemittels steuert, falls die zweite verstrichene Zeit die fünfte Zeit oder länger ist, und den Öffnungs/Schließabschnitt zum Schließen des Kanals steuert, falls die zweite verstrichene Zeit die sechste Zeit oder länger ist.

2. Tuchfügegerät gemäß Anspruch 1, wobei der vorbestimmte Zeitpunkt dann ist, wenn der Befehl zum Beenden des Fügevorgangs durch den ersten Eingabeabschnitt eingegeben wird.

3. Tuchfügegerät gemäß Anspruch 1 oder 2, des Weiteren mit:
einem Erfassungsabschnitt (61), der daran angepasst ist, zu erfassen, ob das Tuch an einer vorbestimmten Position an einer stromaufwärtigen Seite der Düse in einer Tuchvorschubrichtung vorhanden ist oder nicht,
wobei der vorbestimmte Zeitpunkt dann ist, wenn der Erfassungsabschnitt erfasst, dass das Tuch an der vorbestimmten Position nicht vorhanden ist.

4. Tuchfügegerät gemäß einem der Ansprüche 1 bis 3, des Weiteren mit:
einem Erfassungsabschnitt (61), der daran angepasst ist, zu erfassen, ob das Tuch an einer vorbestimmten Position an einer stromaufwärtigen Seite der Düse in einer Tuchvorschubrichtung vorhanden ist oder nicht;
einem ersten Speicherabschnitt (99), der darin eine Vorschubdistanz speichert, über die der Vorschubabschnitt das Tuch vorschieben soll; und
einem Bestimmungsabschnitt (201), der bestimmt, ob der Vorschubabschnitt das Tuch über die Vorschubdistanz nach jenem Zeitpunkt vorgeschoben hat oder nicht, bei dem der Erfassungsabschnitt erfasst, dass das Tuch an der vorbestimmten Position nicht mehr vorhanden ist,
wobei der vorbestimmte Zeitpunkt dann ist, wenn der Bestimmungsabschnitt bestimmt, dass der Vorschubabschnitt das Tuch über die Vorschubdistanz vorgeschoben hat.

5. Tuchfügegerät gemäß einem der Ansprüche 1 bis 4, des Weiteren mit:
einem zweiten Speicherabschnitt (99), der darin Kombinationen der ersten Zeit, der zweiten Zeit, der dritten Zeit, der vierten Zeit, der fünften Zeit und der sechsten Zeit und einer Art des Klebemittels in einer verknüpften Art und Weise speichert; und
einem zweiten Eingabeabschnitt (201), durch den die Art des Klebemittels eingegeben werden kann, wobei:
der Startsteuerabschnitt aus dem zweiten Speicherabschnitt die erste Zeit, die zweite Zeit und die dritte Zeit entsprechend der Art des Klebemittels liest, die durch den zweiten Eingabeabschnitt eingegeben ist, und die erste Zeit, die zweite Zeit und die dritte Zeit jeweils mit der ersten verstrichenen Zeit vergleicht; und
der Endsteuerabschnitt aus dem zweiten Speicherabschnitt die vierte Zeit, die fünfte Zeit und die sechste Zeit entsprechend der Art des Klebemittels liest, die durch den zweiten Eingabeabschnitt eingegeben ist, und die vierte Zeit, die fünfte Zeit und die sechste Zeit jeweils mit der zweiten verstrichenen Zeit vergleicht.

6. Tuchfügegerät gemäß einem der Ansprüche 1 bis 5, des Weiteren mit:
einem Erfassungsabschnitt (61), der daran angepasst ist, zu erfassen, ob das Tuch an einer vorbestimmten Position an einer stromaufwärtigen Seite der Düse in einer Tuchvorschubrichtung vorhanden ist oder nicht;
einem ersten Speicherabschnitt (99), der darin eine Vorschubdistanz speichert, über die der Vorschubabschnitt das Tuch vorschieben soll;
einem Berechnungsabschnitt (201), der eine Referenzzeitperiode berechnet, in dem die in dem ersten Speicherabschnitt gespeicherte Vorschubdistanz durch eine Vorschubgeschwindigkeit des Tuches dividiert wird, das durch den Vorschubabschnitt vorzuschieben ist;
einem dritten Speicherabschnitt (99), der darin eine siebte Zeit zum Spezifizieren einer Steuerzeitgebung des Vorschubabschnitts, eine achte Zeit zum Spezifizieren einer Steuerzeitgebung des Zuführabschnitts und eine neunte Zeit zum Spezifizieren einer Steuerzeitgebung des Öffnungs/Schließabschnitts speichert, wobei die siebte Zeit, die achte Zeit und die neunte Zeit unter Bezugnahme auf einen Referenzzeitpunkt definiert sind, wenn die durch den Berechnungsabschnitt berechnete Referenzzeitperiode verstrichen ist, nachdem der Erfassungsabschnitt erfasst hat, dass das Tuch an der vorbestimmten Position nicht vorhanden ist; und
einem Spezifikationsabschnitt (201), der die vierte Zeit auf der Grundlage des Referenzzeitpunkts und der siebten Zeit spezifiziert, die fünfte Zeit auf der Grundlage des Referenzzeitpunkts und der achten Zeit spezifiziert und die sechste Zeit auf der Grundlage des Referenzzeitpunkts und der neunten Zeit spezifiziert,
wobei der Endsteuerabschnitt den Vorschubabschnitt, den Öffnungs/Schließabschnitt und den Zuführabschnitt auf der Grundlage der vierten Zeit, der fünften Zeit und der sechsten Zeit steuert, die durch den Spezifikationsabschnitt spezifiziert sind.

## Revendications

1. Dispositif de soudage de tissu comprenant :
un injecteur (45) à travers lequel un adhésif peut être distribué sur un tissu ;
une partie d'introduction (24 et 25) qui est adaptée de manière à introduire le tissu ;
un canal (53) à travers lequel l'adhésif peut s'écouler vers l'injecteur ;
une partie d'ouverture/fermeture (55) qui ouvre et ferme le canal ;
une partie d'alimentation (35) qui est adaptée afin d'alimenter le canal avec l'adhésif ;
une première partie d'entrée (206) par l'intermédiaire de laquelle une instruction d'initiation ou d'interruption d'un travail de soudage consistant à souder le tissu peut être entrée
**caractérisé par**
une première partie de mesure (201) qui mesure une première durée écoulée depuis que l'instruction d'initiation du travail de soudage a été entrée par l'intermédiaire de la première partie d'entrée ;
une partie de commande d'initiation (201) qui commande la partie d'introduction afin d'initier l'introduction du tissu dans un cas dans lequel la première durée écoulée est supérieure ou égale à une première durée, commande la partie d'alimentation afin d'initier l'alimentation de l'adhésif dans un cas dans lequel la première durée écoulée est supérieure ou égale à une seconde durée, et commande la partie d'ouverture/fermeture afin d'ouvrir le canal dans un cas dans lequel la première durée écoulée est supérieure ou égale à la troisième durée ;
une deuxième partie de mesure (201) qui mesure une deuxième durée écoulée depuis un instant prédéterminé, après que la partie de commande d'initiation a commandé les parties d'introduction, la partie d'ouverture/fermeture et la partie d'alimentation ; et
une partie de commande d'interruption (201) qui commande la partie d'introduction de manière à interrompre l'introduction du tissu dans un cas dans lequel la deuxième durée écoulée est supérieure ou égale à la quatrième durée, commande la partie d'alimentation de manière à interrompre l'alimentation de l'adhésif dans un cas dans lequel la seconde durée écoulée est supérieure ou égale à la cinquième durée, et commande la partie d'ouverture/fermeture de manière à fermer le canal dans un cas dans lequel la deuxième durée écoulée est supérieure ou égale à la sixième durée.

2. Dispositif de soudage de tissu selon la revendication 1, dans lequel l'instant prédéterminé est l'instant auquel l'instruction d'interruption du travail de soudage est entrée par l'intermédiaire de la première partie d'entrée.

3. Dispositif de soudage de tissu selon la revendication 1 ou 2, comprenant, en outre :
une partie de détection (61) qui est adaptée de manière à détecter si le tissu est présent ou non à un emplacement prédéterminé sur un côté amont de l'injecteur suivant une direction d'introduction de tissu,
dans lequel l'instant prédéterminé est l'instant auquel la partie de détection détecte que le tissu n'est pas présent à l'emplacement prédéterminé.

4. Dispositif de soudage de tissu selon l'une quelconque des revendications 1 à 3, comprenant, en outre :
une partie de détection (61) qui est adaptée de manière à détecter si le tissu est présent ou non à un emplacement prédéterminé sur un côté amont de l'injecteur suivant une direction d'introduction de tissu ;
une première partie de mémorisation (99) à l'intérieur de laquelle est mémorisée une distance d'introduction sur laquelle la partie d'introduction doit introduire le tissu ; et
une partie de détermination (201) qui détermine si la partie d'introduction a introduit ou non le tissu sur la distance d'introduction depuis l'instant auquel la partie de détection a détecté que le tissu n'est plus présent à l'emplacement prédéterminé,
dans lequel l'instant prédéterminé est l'instant auquel la partie de détermination détermine que la partie d'introduction a introduit le tissu sur la distance d'introduction.

5. Dispositif de soudage de tissu selon l'une quelconque des revendications 1 à 4, comprenant, en outre :
une deuxième partie de mémorisation (99) à l'intérieur de laquelle sont mémorisées des combinaisons de la première durée, la deuxième durée, la troisième durée, la quatrième temps, la cinquième durée et la sixième durée et d'un type de l'adhésif d'une manière associée ; et
une seconde partie d'entrée (201) par l'intermédiaire de laquelle le type de l'adhésif peut être entré, dans lequel :
la partie de commande d'initiation lit, à partir de la deuxième partie de mémorisation, la première durée, la deuxième durée et la troisième durée correspondant au type de l'adhésif entré par l'intermédiaire de la seconde partie d'entrée et compare chacune de la première durée, la deuxième durée et la troisième durée à la première durée écoulée, et
la partie de commande d'interruption lit, à partir de la deuxième partie de mémorisation, la quatrième durée, la cinquième durée et la sixième durée correspondant au type de l'adhésif entré par l'intermédiaire de la seconde partie d'entrée et compare chacune de la quatrième durée, la cinquième durée et la sixième durée à la deuxième durée écoulée.

6. Dispositif de soudage de tissu selon l'une quelconque des revendications 1 à 5, comprenant, en outre :
une partie de détection (61) qui est adaptée de manière à détecter si le tissu est présent ou non à un emplacement prédéterminé sur un côté amont de l'injecteur suivant une direction d'introduction de tissu ;
une première partie de mémorisation (99) à l'intérieur de laquelle est mémorisée une distance d'introduction sur laquelle la partie d'introduction doit introduire le tissu ;
une partie de calcul (201) qui calcule une durée de référence en divisant la distance d'introduction mémorisée dans la première partie de mémorisation par une vitesse d'introduction du tissu à introduire par la partie d'introduction ;
une troisième partie de mémorisation (99) à l'intérieur de laquelle est mémorisée une septième durée destinée à spécifier une séquence de commande de la partie d'introduction, une huitième durée destinée à spécifier une séquence de commande de la partie d'alimentation et une neuvième durée destinée à spécifier une séquence de commande de la partie d'ouverture/fermeture, la septième durée, la huitième durée et la neuvième durée étant définies en se référant à un instant de référence auquel la durée de référence calculée par la partie de calcul s'est écoulée depuis que la partie de détection a détecté que le tissu n'est pas présent à l'emplacement prédéterminé ; et
une partie de spécifications (201) qui spécifie la quatrième durée sur la base de l'instant de référence et de la septième durée, spécifie la cinquième durée sur la base de l'instant de référence et de la huitième durée, et spécifie la sixième durée sur la base de l'instant de référence et de la neuvième durée,
dans lequel la partie de commande d'interruption commande la partie d'introduction, la partie d'ouverture/fermeture et la partie d'alimentation sur la base de la quatrième durée, la cinquième durée et la sixième durée spécifiées par la partie de spécification.
